# EUROPEAN PATENT SPECIFICATION

(11) **EP 4 650 901 B1**
(45) Date of publication and mention of the grant of the patent: **23.09.2026**
(21) Application number: 24176647.6
(22) Date of filing: 17.05.2024
(51) Int. Cl.: G05D 1/246, G05D 1/633, G05D 1/693, G05D 1/698, G05D 105/28, G05D 107/70, G05D 109/10

(54) **AUTONOMOUS VEHICLE MANAGEMENT SYSTEM AND METHOD**
AUTONOMES FAHRZEUGVERWALTUNGSSYSTEM UND -VERFAHREN
SYSTÈME ET PROCÉDÉ DE GESTION DE VÉHICULE AUTONOME

(43) Date of publication of application: 19.11.2025
(73) Proprietor: Hitachi, Ltd., Tokyo 100-8280 (JP)
(72) Inventor: OGATA, Takehito, 85445 Schwaig-Oberding (DE); YAMADA, Hiroyuki, Tokyo 100-8280 (JP)
(74) Representative: MERH-IP Matias Erny Reichl Hoffmann Patentanwälte PartG mbB

(56) References cited:
- US-A1- 2017 372 563
- US-A1- 2019 257 661
- US-A1- 2022 163 969

## Description

The present application relates to an autonomous vehicle management system and a method for dynamically managing the moving routines of one or more autonomous vehicles.

In recent years, demand for human cooperative autonomous robot systems has significantly increased due to the ever-growing need of providing fast and controllable working routines while simultaneously facing a decline in work population. Within such intricate ecosystem, it became paramount to optimize productivity while, at the same time, ensuring safety for each of both human workers as well as autonomous components coexisting within a predefined space, resulting in the effect that common cooperative systems nowadays are running a number of safety strategies implemented within the system's management core.

Here, one common and efficient strategy to further enhance safety measures in cooperative systems was found by dynamically allocating exclusive safety areas for each of the human and machine workers included in a predefined working space and performing safety stop interaction by the machine workers whenever two of these exclusive areas were overlapping.

As a most prominent example, in JP 2021 135 801 A, a similar exclusive safety area mechanism was applied to a system managing the control of autonomous forklifts picking up one or more pallets at a starting position and transporting them to a predestined location: when a forklift arrived at a given starting position, a predetermined system component is stipulated to allocate an exclusive safety area to the corresponding forklift based on a detected position of the forklift itself as well as the position and direction of the required pallets. Further, for providing the exclusive safety areas to the aforementioned forklift, different allocation patterns are stipulated in order to further align the corresponding exclusive area allocation process to the requirements of the underlying management system.

Furthermore, within US 2022/0163969 A1, a system and a method to optimize route plans for handling critical scenarios faced in an operating environment having multiple automatically driven devices is described. Herein, specifically, the system plans one or more device routes based on predetermined route nodes while, in order to equally plan in potential critical scenarios (collisions etc.), the system also provides a number of additional route plans and is capable of deciding which of the route plans is to be followed.

In addition, in US 2019/257661 A1, a method for controlling an autonomous vehicle (AV) using a combination of perception and decision-making processes based on sensor data is delineated. Specifically, the system analyses environmental information, including data from cameras, radar, and other sensors, to detect and classify objects such as pedestrians, vehicles, and road hazards in the vehicle's surroundings. Moreover, a key feature of the system is its use of machine learning models to evaluate the potential risk associated with each detected object. By assessing factors such as speed, trajectory, and proximity, the vehicle can calculate the likelihood of an impending collision or dangerous situation. Based on this analysis, the system makes decisions in real-time to control the vehicle's speed, braking, acceleration, and steering to mitigate risks.

Moreover, US 2017/372563 A1 discloses a system comprising multiple industrial vehicles in which, in order to estimate the collision potential of respective human workers trespassing side-by-side with the corresponding vehicles, given human workers are additionally stipulated to wear electronic badges connected with an external badge communicator. Said badge communicator, in turn, is capable of transfer positional information of the electronic badges to each of the existing industrial vehicles, resulting in a more precise detection of the coworkers' position and, with it, assessment of possible moving routes to be taken by the industrial vehicles.

Herein, specifically, as a first embodiment of the above-mentioned allocation pattern, the system of the cited document stipulated to allocate a fixed exclusive safety area for each of the existing forklifts which were large enough to cover all potential moving and/or emergency routes, including cases in which the corresponding fork lift is required to depart from its originally assigned route, such as in case of emergent collision events. In addition, as a second embodiment, allocation of safety areas different from such of the initial moving route should be only performed after determining the necessity of additional emergency routes.

On that account, even though each of the above-mentioned allocation patterns are, to some extent, further able to improve the safety or the efficiency within an existing cooperative system, there is still the problem that none of the yet existing safety area allocation strategies are able to sufficiently and synergistically enhance both of the required system properties at the same time. For instance, while the first embodiment of the above-cited allocation strategies may be able to cover all potential emergency routes and thus provide an enhanced safety structure for all individuals existing within the given system, the allocation of all potential routes also requires the allocation of a large exclusive safety area per machine unite, even if not used, and thus further restrict the movement of other system entities, hence ultimately leading to a decrease of the system's efficiency. On the other hand, while the restriction of small exclusive safety areas stipulated by the second embodiment may allow for a more versatile movement pattern of each of the existing machines, the allocation of safety areas only in times of determined emergencies may result in a less safe environment while, at the same time, forcing the respective machines to undergo standby periods until an appropriate emergency route and associated safety area is found by the system.

Thus, in order to solve the above-mentioned problem and to further improve both the efficiency and the safety environment apparently missing within the cooperative autonomous systems of the state of the art, an autonomous vehicle management system and a method according to the present claims are herewith suggested. Dependent claims further define favourable embodiments of the claimed invention.

On this account, the autonomous vehicle management system according to the claimed invention may be specifically configured to synergistically enhance the safety and efficiency properties within a cooperative environment by providing a dynamic safety area allocation strategy for one or more autonomously driven vehicles within a system, particularly by implementing an anticipatory hazard detection mechanism in cooperation with a dynamic and responsive vehicle route and exclusive area allocation assignment strategy.

For this, specifically, the autonomous vehicle management system of the claimed invention may be primarily able to dynamically manage the driving routine of a plurality of autonomous vehicles included in a predefined environment, such as a warehouse, an official or self-contained street or road or any given area being assignable as a setting for a cooperative autonomous system. As such, the present invention is thus not restricted to a specific autonomous system or a specific vehicle type but can be potentially implemented in any autonomous system including enclosed automatic supply systems, such as proposed by the automatic forklift environment presented in the above-cited document, but also outdoor frameworks such as provided by tracked or wheeled self-propelled cars, busses or even railroad elements.

### General structure of the autonomous vehicle management system

Concerning the included elements provided by the proposed invention, the suggested autonomous vehicle management system may, according to a preferential embodiment, initially comprise at least of an external control centre including at least an exclusive area manager for managing the exclusive safety areas present or to be implemented within the system, one or more autonomous vehicles being communicatively connected to the external control centre and at least a route planner for managing the different moving routes assigned to the one or more autonomous vehicles.

Herein, the external control centre may be, preferentially, arranged as a central or de-central communication device being perpetually or restrictedly coupled to each of the one or more autonomous vehicles by means of a communicative connection, such a wireless LAN connections, Bluetooth^{®} or any other preferentially wireless connection possibilities allowing the external control centre to transfer data and/or instructions to the one or more autonomous vehicle while, at the same time, being able to receive information from the one or more autonomous vehicles for internal processing. As a consequence, also the exclusive area manager of the external control centre may be preferentially designed as a physical or computational module of the external control centre and is therefore able to bilaterally communicate with the one or more autonomous vehicles present in the system.

Further, as for the route planner, its respective physical and/or computational elements may be equally implemented as a module in the external control centre and thus share the same communicative abilities as such assigned to the aforementioned exclusive area manager. In contrast, in additional and equally preferable embodiments, it is yet likewise possible that the route planner may be also designed as a standalone device having the same communicative properties given to the external control centre or that the route planner may be particularly implemented as an integral component of each of the one or more autonomous vehicles.

In addition, as for the initial characteristics of each of the above-mentioned system elements, the route planner and the exclusive area manager may be preferentially defined as connected and central system components capable of defining and supervising present moving routes and associated exclusive safety areas assigned to each of the one or more autonomous vehicles based on one or more implemented mechanisms described below.

### Calculation and assignment of initial routes and exclusive safety areas

On that account, in a first preferable embodiment, the route planner may be for example initially and preferentially configured to calculate and assign at least an initial moving route (hereinafter referred to as 'initial route') to each of the one or more autonomous vehicles, defining a preferred moving route and including moving instructions by which a predetermined autonomous vehicle is prescribed to move within the systems environment, while the exclusive area manager may be further configured, based on the calculated initial route, to calculate and store at least an exclusive safety area respectively assigned to each of the generated initial routes defining the area in which a given autonomous vehicle may be configured to automatically halt in case an object is found to step into the respective safety area. As a consequence, using the above-mentioned initial definition of an initial route and an associated exclusive safety area, the corresponding autonomous vehicle management system may be able to generate an initial moving track at which a predetermined autonomous vehicle is allowed to move, particularly so as to fulfil an existent task requested from the vehicle (e.g. the transportation of a given element from a starting point to a destined location), while, at the same time, safety within the environment of the system can be maintained by means of the additional provided and exclusively defined safety areas.

Herein, the generation and assignment of each of the respective initial routes and exclusive safety areas provided by the route planer and the exclusive area may differ depending on the internal structure of the overarching cooperative system. In a first embodiment, it may be, for example, preferably possible that a given task, such as a transportation of a predefined object, may be assigned to one of the one or more autonomous vehicles included in the system (e.g. by an external message provided by a user or the system itself), resulting in the effect that the autonomous vehicle is required to receive route instruction so as to safely move from a predetermined starting position to its directed target location. In this embodiment, the respective autonomous vehicle may be able to send a request to the route planer for finding a sufficient route to reach the respective while the route planner may be correspondingly configured to calculate a respective initial route for the corresponding autonomous vehicle based on information included in the received route calculation request (e.g. the calculation request may comprise a given starting location, an end location, a predetermined time by which the autonomous vehicle has to reach the end location or speed specifications by which the route planer may derive the initial route). In addition, after calculating a sufficient route, the route planer may be further preferably configured to send the calculated initial route to the exclusive area manager and request, from the exclusive area manager, to calculate and assign a corresponding exclusive safety area for the calculated initial route.

The exclusive area manager, in turn, may be thereinafter be configured to calculate, that is, derive a sufficient exclusive safety area for the respective initial route preferable based on information received with the request of the route planner and/or internal guidelines predetermined by the autonomous vehicle management system. As an example, the exclusive area manager may derive a corresponding exclusive safety area associated to the given initial route by allocating a predetermined area around the initial route comprising a predefined size, wherein the size of the respective area may be dependent on a size parameter preset within the respective system. Moreover, in addition or alternative to the above-mentioned approach, the exclusive area manager may be likewise configured to assign additional parameter so as to further define the size or shape of the corresponding exclusive area.

Herein, as an example, the exclusive area may be preferably further configured to define the exclusive safety area in a time or location dependent manner. As an instance, a given exclusive safety area may be also defined as a given area surrounding the current position of the autonomous vehicle assigned to the initial route while the size of the area can be again predetermined by a system-specific parameter. In this way, it is specifically possible to provide a most notably efficient safety area determination process, particularly as by allocating only the area currently surrounding the respective autonomous vehicle, remaining and currently unused area within the system's environment can still be assigned/allocated to different system elements. Further, in another example, it may be equally possible that also the size or the position of the exclusive area may be defined varying depending on the present time, location or other parameter of the environment or assigned autonomous vehicle, resulting in the effect that the exclusive safety area can be likewise specifically aligned to different requirements included in the system, if necessary (e.g. in case different locations of the system demand different safety distances).

As a consequence, based on the above-mentioned generation mechanism conducted by the route planer and the respective exclusive area manager, it may be possible to determine a sufficient initial route and safety area required by the one or more autonomous vehicles included in the system to reach a given predetermined location.

At the same time, it is yet further noted that the above-mentioned exemplary determination process of both the route planer and the exclusive area manager define only one of multiple possible embodiments by which a corresponding initial route and an associated exclusive safety area may be generated and thus is not to be considered limiting the general scope of the invention.

Thus, as an alternative embodiment different from the above-mentioned description, the generation and assignment of a given initial route must be for example not limited to a single autonomous vehicle present within the corresponding system but can be likewise used to calculate and assign a single initial route to a multiple of existing autonomous vehicles. This can be for example seen useful in case of repetitive delivery routes or locally limited environments in which a majority of autonomous vehicles are, per definition, at least partially forced to share the same transportation track, particularly as by calculating and assigning a single initial route to multiple autonomous vehicles, resources required to assign each of the autonomous vehicles with an own seemingly identical initial route can be efficiently conserved. The calculation and definition of the respective exclusive safety area can be, in turn, again conducted in a vehicle-specific manner, e.g. by defining each of the respectively used exclusive safety areas depending on the location of the vehicle it is to be assigned, or by, vice versa, by generally claiming a predefined area surrounding the initial route shared by all of the corresponding autonomous vehicles.

In addition, also the existence of already calculated and assigned initial routes and exclusive safety areas used by other autonomous vehicles may be utilized by the route planer and the exclusive area manager to determine and calculate a corresponding new initial route.

Herein, it may be for example possible, that, after successfully calculating and assigning a respective initial route and an exclusive safety area associated with the initial route, the external control centre may be further configured to store information regarding the calculated and assigned initial route and associated exclusive safety area in a predetermined storage space, preferably provided by an internal or external storage element connected to the external control centre, such as a hard drive, a storage server or any other entity capable of securely saving information generated or received by the external control centre. Based on this, the route planer and/or the exclusive area manager may be, for example, likewise preferably configured, for the calculation of the initial route or the associated exclusive safety area, to refer to the stored information regarding the initial routes and associated exclusive safety areas currently already used by the multitude of other autonomous vehicles existing in the system and calculate a new initial route or associated exclusive safety area based on the referred information.

As a consequence, in a preferred embodiment, the route planer may be also exemplary configured to extract information from the predetermined storage space regarding the current or prospective position of existing initial routes and/or exclusive safety areas already assigned to different autonomous vehicles in the system and calculate a corresponding initial route in a way so as to avoid contact or proximities with said other autonomous vehicles. For this, for example, the route planer may be preferably configured to calculate only initial routes that are, preferentially, not overlapping with an initial route or an exclusive safety area stored and, thus, already assigned to any of the other autonomous vehicles, resulting in the effect that a potential collision with other elements within the system can be efficiently avoided. In the same way, also the exclusive area manager may be configured to calculate and assign an associated exclusive safety area for a calculated initial route only in case said safety area may not coincide with an already calculated and assigned initial route or exclusive safety area associated with a different vehicle so that also the generation and assignment of corresponding safety areas can be conducted in a safety promoting manner.

Accordingly, it is understood that already based on the above-mentioned mechanism of adaptively calculating and assigning an initial route and an associated exclusive safety area to a predefined autonomous vehicle, an improvement over the present management system of the state of the art can be generated, specifically since by further providing a customizable and scalable route generation mechanism, a more precise and therefore safer route management process can be enabled.

### Behaviour of the one or more autonomous vehicles

Further, following the calculation of an initial route and an associated exclusive safety area assigned to at least one of the one or more autonomous vehicles existing in the system, the exclusive area manager of the external control centre may preferably transfer the initial route and the associated exclusive safety area (including the moving instructions) to the assigned autonomous vehicle.

For this, the external control centre may keep track of the present initial routes and exclusive safety areas currently assigned to the existing autonomous vehicles in the system by initially and additionally storing information regarding the initial route and the exclusive safety area in a predetermined storage space, such as the storage space used for calculating the initial route and the exclusive safety area or another storage space different from the latter. At the same time, the stored information may also preferably contain further specifications or indications connected to the stored initial route and the associated exclusive safety area, such as specifications of the assigned autonomous vehicle (e.g. a registration number, present location, initial request transferred to the vehicle etc.) or dynamically updated parameters, such as the current position of the assigned autonomous vehicle, so as to allow for a precise revision of the vehicle's actions in case of need.

The respective one of the one or more autonomous vehicles assigned to the calculated initial route and associated exclusive safety area, in turn, may be preferably configured to receive the respectively calculated initial route and exclusive safety area from the exclusive area manager and further move from a predetermined start point to a destination point based on the assigned and received initial route.

Herein, as stated above, the information received by initial route and the exclusive safety area may contain additional specifications for the corresponding autonomous vehicle indicating how the autonomous vehicle is required to move. As an example, the initial route may contain additional information of the starting time, the starting location and/or the velocity by which the assigned autonomous vehicle is required to conduct its moving. Further, additional environmental information or conditions, such as specific stop specifications by which the vehicle is required to halt (e.g. in case of detected objects such as a detected 'stop' sign or a red-light traffic light) may be equally included in the initial route or exclusive safety area information so that each of the existing one or more autonomous vehicles in the system may receive specific instruction of how to conduct its requested actions.

Further, concerning the general composition of the existing autonomous vehicles included in the system, the design of each of the autonomous vehicle is not limited to a specific task or superstructure but can be generally assigned to any autonomous vehicle layout capable of self-propelling, particularly based on received instructions such as the initial route and the exclusive safety area mentioned above. Accordingly, an 'autonomous vehicle' in the concept of this invention may be preferably and initially understood at least as each of a movable entity being compatible with the mechanisms of the additional external control centre included in the system while also being able to automatically follow the instructions mentioned above.

### Hazard detection mechanism

Accordingly, using the initial mechanism of the external control centre and the one or more autonomous vehicles to calculate and assign an initial route and an associated exclusive safety area to each of the one or more autonomous vehicles in the system, the present invention is capable of sufficiently and dynamically managing assignments of intended moving routines, even for a multitude of autonomous vehicles simultaneously moving within a predefined system space.

At the same time, in order to equally encompass the generation and usage of potential emergency routes for each of the autonomous vehicles required in a cooperative system, particularly so as to avoid collisions with unexpected objects such as human workers coexisting in the system's environment and neglecting present assigned exclusive safety areas, the proposed autonomous vehicle management system may further comprise an additional emergency route and associate emergency safety area calculation mechanism further enhancing the safety and efficiency of the overarching system.

Specifically, for this, the autonomous vehicle management system may preferably employ an additional anticipatory hazard detection mechanism coupled to an alternative route (also hereinafter called 'candidate route') and exclusive safety area calculation process by which an additional, dynamic and adaptive collision avoidance strategy can be enabled.

On that account, to initially generate such an additional anticipatory hazard detection mechanism, the external control centre and/or the one or more autonomous vehicles existing in the system may be further preferable configured to detect changes of an environment around an initial route assigned to at least one of the one or more autonomous vehicles.

Herein, a 'detection of changes of an environment' may preferentially refer to any potential recognition, including optical, electrical, acoustic or any other type of recognition usable for identification, by which the external control centre or at least one of the one or more autonomous vehicles may be able to recognize objects or other entities (e.g. a human-being or a moving machine) within the system and detect a change of the objects position or other detectable characteristics for hazard determination.

Thus, in a first favourable embodiment, it may be for example possible that the one or more autonomous vehicles of the system may be further equipped with on or more detectors being capable of detecting objects or entities existing within the system's environment, such as equipped cameras, infrared sensors or location scanners, and which may be able to at least track the position or other properties of the detected object over a certain predetermined amount of time. In the same way, also the external control centre may comprise such detectors, exemplary by positioning the detectors at predetermined locations within the system's environment and communicatively connecting them to the external control centre, leading to the effect that each of the elements existing within the present autonomous vehicle management system may be used as a detection component to be utilized in the anticipatory hazard detection mechanism. Further, in additional embodiments, it may yet be equally possible that the detection of specific objects may be also based on the reception and analysis of additional information detected outside of the system itself, exemplarily by using GPS data of specific objects recognized, e.g., by an external satellite system, and transferring said data to at least one of the external control centre or the one or more autonomous vehicles, so that the respective detection mechanism conducted herein is not restricted to an active 'detection' solely performed by one or more entities of the corresponding system alone, but can be likewise understood as a cooperative detection system.

As a consequence, in order to establish the above-mentioned anticipatory hazard detection mechanism in the present invention, the external control centre and/or the one or more autonomous vehicles being configured to detect changes within a corresponding environment around an initial route may be specifically configured to recognize objects existing around an assigned initial route, particularly by observing a predetermined area around a given initial route by means of at least one of the above-mentioned detection mechanism and detect the time-dependent behaviour, that is, preferably, spatial position changes, velocities or any other preferred property of each of the so recognized objects around the environment.

Further, in order to utilize the so generated environment information for the anticipatory hazard detection mechanism and thus allow for an adaptive and dynamic generation of emergency routes for each of the one or more autonomous vehicles, the respective external control centre and/or one or more autonomous vehicles performing the object detection may be further configured to determine, based on the detected behaviour of the recognized objects, if one or more of the recognized objects is to be identified as a potential threat to the one or more autonomous vehicles assigned to the observed initial route while, depending on the determination, the external control centre and/or the one or more autonomous vehicles may be likewise further configured to calculate an appropriate emergency route and an associated exclusive safety area to be used by the one or more autonomous vehicles in case a respective object becomes an actual, i.e. factual hazard at some point. Thus, compared to the existing emergency area allocations currently being used in the management systems of the state of the art, the emergency route and safety area generation mechanism of the present invention may not just generate and allocate a specific number of emergency routes and associated exclusive safety areas simultaneously to the generation of a given initial route or, respectively, only at a time, at which a factual hazard was already detected, but instead may be particularly configured to perform pre-emptive and adapted emergency route and associated exclusive safety area calculations whenever a given object is already identified to be a potential hazard (that is, an object being potentially a hazard to one or more of the autonomous vehicle in the future), instead of a factual (that is, existent) hazard.

As a consequence, based on the above-mentioned adaptive emergency route and associated safety area generation mechanism, potential standby times required by a corresponding autonomous vehicle to calculate a functional emergency route when facing a real hazard can be efficiently avoided, specifically since each of the one or more autonomous vehicles may be (at the time of facing the threat) already equipped with a number of corresponding emergency (route) strategies to be used, while, at the same time, the amount of required emergency routes and associated exclusive safety areas may be significantly reduced by means of the adaptive properties of the correspondingly calculated emergency routes.

Based on this, the corresponding hazard detection and adapted emergency route calculation and associated safety area calculation strategy conducted by the proposed autonomous vehicle management system may be preferentially processed as follows.

In a first step, the external control centre and/or the one or more autonomous vehicles detecting the changes of an environment around a predefined initial route may be initially configured to select information regarding a recognized object and subsequently determine the hazardousness of the respective object based on these information.

For this, the external control centre or the one or more autonomous vehicles may be, for example, configured to collect the object specific information from its own storage space, specifically by priory and continually storing the information, such as e.g. the position, the time point or even a velocity of each recognized object in an object specific manner and subsequently retrieving this information for hazard detection, or request the required information from other entities of the autonomous vehicle management system. Herein, as an example, opposed to an individual storage space, each of the external control centre or the one or more autonomous vehicles may be equally and preferably connected with a central storage entity, such as, again, a storage server or a communicatively connectable hard drive, by which each of the detected object information may be consecutively and alternatively stored and accessed from.

Subsequently, in case the respective external control centre or the one or more autonomous vehicles successfully retrieved the information regarding a given detected object, a determination of the hazardousness (also called 'hazard determination process') of the given object may preferably performed by classifying the object, based on said information, in one of several hazard levels defined by the system.

Here, as a preferable embodiment, the autonomous vehicle management system may, for example, comprise at least three hazard levels which may define the hazardous nature of each of the detected objects and which may be subdivided by the names of 'factual hazard', 'potential hazard' and 'no hazard' further described below.
- Specifically, an object classified as a 'factual hazard' may be seen as an object requiring immediate response by at least one of the one or more autonomous vehicles, specifically since such object appears to collide or otherwise harm a respective autonomous vehicle in a foreseeable amount of time. An example for these objects may be a human-being jumping directly in front of a moving vehicle.
- A 'potential hazard', in contrast, may be seen as an object which may potentially become a 'factual hazard' at some time but is yet not to be seen an actual threat to one of the one or more autonomous vehicles of the system. An example for this may be, for instance, a human worker walking next to a moving autonomous vehicle while still being considerable far away from the vehicle.
- Lastly, an object classified as 'no hazard' may be any object that is, at the time of detection, not to be considered causing any potential threat, at least in near future, to the autonomous vehicles. This may be for example happening in case a given object holds a satisfactory distance to each of the vehicles, resulting in the effect that no harm can be expected from the object at the time being.

In doing so, the classification of each of the recognized objects in one of the above-mentioned hazard levels may be, by itself, preferably conducted by comparing the object information received by the external control centre or the one or more autonomous vehicles with one or more parameters and/or thresholds predetermined by the system, preferably defined by the existing one or more autonomous vehicles.

On this account, in a first preferable embodiment, a determination of the hazard level of a recognized object may be, for example, conducted by analysing the distance of the recognized object to each of the one or more autonomous vehicles existing within the system or currently moving along the observed initial route and comparing said distances with predefined distance thresholds functioning as upper or lower categorization limits.

Accordingly, within the given embodiment, the external control centre or the one or more autonomous vehicles may be, for the hazard determination of the respective object, for example preferably configured to extract at least a position, most preferably the current position of the respective object from the corresponding object information and calculate the distance of the object to each of the corresponding vehicles. Subsequently, the external control centre or the one or more autonomous vehicles may further compare the calculated distances to predetermined distance thresholds and assign the object, for each of the autonomous vehicles associated with a given distance, with one of the above-cited hazard levels.

As a consequence, given that a distance of the respective object to one of the one or more autonomous vehicle may be for example determined as less than a predetermined potential hazard value yet larger than a predetermined factual hazard value, the external control centre and/or the one or more autonomous vehicles may be for example configured to define the object as a 'potential hazard' (with respect to the autonomous vehicle assigned to the used distance) while distances lower than the predetermined factual hazard value may lead to a categorization as a 'factual hazard' for the specific vehicle. In contrast, distances larger than the mentioned potential hazard value may lead to the categorization of 'no hazard'.

Consequently, based on the above-mentioned vehicle specific determination of the hazard levels conducted for each object and each autonomous vehicles present in the system, the present invention is able to provide a mechanism capable of reliably anticipating the hazardousnessof any object recognized by the external control centre and/or the one or more autonomous vehicles, resulting in the effect that effective countermeasures to avoid vehicle collision and/or standby times can be performed, even prior to the detection of actual hazards present in the system. In addition, since each of the identified hazard levels is likewise already defined based on a particular vehicle distance and, therefore, is also always assigned to a respective vehicle, each of the calculated hazard levels can be likewise seen as an efficient way to further improve the adaptability and efficiency of the system, particularly as by only performing emergency route generation in case of specific hazard levels and only for specific vehicles, the number of required safety area allocations and, generally, required calculation procedures within the system can be significantly reduced.

Further, apart from the above-mentioned distance conditions, also other object information and/or system thresholds may be preferentially used so as to produce and/or influence alternative or additional hazard level categorizations.

For example, in another embodiment, it may be preferably possible that also additional characteristic properties of a given object, such as the type of the object (e.g. whether the object is a human or a machine), its size or its past trajectory may be included for determining the respective hazard levels.

In addition, in a further preferential embodiment, it may be likewise possible that the external control centre or the one or more autonomous vehicles are equally configured to determine a given hazard level not only by parameters referring to the present properties of the object and the corresponding autonomous vehicle, but also to such potentially existing in the near future, for instance by further relying on extrapolation of already existing movement pattern of both the object or a corresponding autonomous vehicle.

On that account, in an additional preferable embodiment of the above-mentioned hazard determination process, the external control centre and/or the one or more autonomous vehicles may be equally configured to determine, based on information referring to the object and a corresponding autonomous vehicle (such as a trajectory or a time-dependent sequence of position information), to anticipate the distance between the object and the corresponding autonomous vehicle existing in a predetermined and prospective amount of time and subsequently categorise the hazard level of the respective object based on said anticipated distance. In this way, even a more secure emergency detection can be generated, particularly since potential threats to the one or more existing autonomous vehicles within the system (and, respectively, effective interventions) may be detected even earlier.

### Hazard detection-based vehicle behaviour

In addition, following the identification of the respective hazard levels assigned to each recognized object and associated to each corresponding autonomous vehicle, that is, the determination of potential and factual hazards to be concerned at the given timepoint of recognition, the autonomous vehicle management system may further perform, based on the determined hazards, a number of different countermeasures including the generation of emergency routes and associated safety area allocations for each of the one or more autonomous vehicles associated with a given hazard level, particularly so as to effectively overcome any threats currently existing in the system.

On that basis, at least one or more of the following measures may be preferably performed by the autonomous vehicle management system or a corresponding element thereof, wherein, for enhanced comprehensibility, each of the measures may be herein exemplarily conducted to an initial autonomous vehicle (hereinafter also named as 'the first autonomous vehicle') representing any of the one or more autonomous vehicles of the system being assigned to (and most preferably already moving along) an initial route and being associated with one or more hazard level detections determined in a previous hazard determination process.
- Accordingly, in case the first autonomous vehicle is found to be associated only to 'no hazard' level determinations, that is, in case no potential and/or factual hazard could be presently found by the hazard determination process for the first autonomous vehicle, the autonomous vehicle management system may be configured to halt on any additional actions concerning the first autonomous vehicle and thus let the first autonomous vehicle continue moving along its initially assigned initial route.
- Further, in case the first autonomous vehicle may be assigned to at least one 'potential hazard' determination, thus defining that at least one potential hazard may have been detected for the first autonomous vehicle, the autonomous vehicle management system, more specifically, the external control centre and/or the one or more autonomous vehicles may be configured to perform a candidate route generation process defining the generation of potential emergency routes to be used by the first autonomous vehicle in case the object referring to the 'potential hazard' may, at some time, become a factual hazard. For this the external control centre and/or the one or more autonomous vehicles may be preferentially at least configured to calculate and store one or more potential emergency routes (hereinafter also referred to as 'candidate routes') for and associated to the first autonomous vehicle capable of avoiding the hazard generated by the respectively recognized object and further calculate and store an exclusive safety area (hereinafter referred to as 'candidate safety area') associated to each of the respective candidate routes. As a consequence, in this way potential emergency routes may be already available for the first autonomous vehicle in case a previously recognized potential hazard may change from a potential hazard to a factual hazard.
- In addition, in case a given object was determined to be a 'factual hazard' for the first autonomous vehicle, hence showing at least one 'factual hazard' determination event in a corresponding hazard determination process, the first autonomous vehicle may be configured to perform a route switching process for then efficiently avoiding the respective hazard now imminently present in the vicinity of the first autonomous vehicle. For this, the first autonomous vehicle may preferable select one of the already stored candidate routes previously calculated and assigned to the first autonomous vehicle, set the selected candidate route as a new initial route to be followed and the exclusive candidate safety area associated with the selected candidate route as the new exclusive safety area and finally continue moving along the new initial route so as to effectively continue travelling to the destined location without requiring any further stops. In contrast, in case no candidate route and/or associated candidate safety area can be selected by the first autonomous vehicle, the first autonomous vehicle may be preferably configured to halt its movement, resulting in a forced collision avoidance by the autonomous vehicle management system.

As a consequence, based on the above-mentioned process steps to be conducted by the first autonomous vehicle in case of detected hazard levels, an efficient and anticipatory hazard avoidance strategy may be generated. Particularly, since the above-mentioned candidate route generation process is normally performed prior to the route switching process (specifically as the system may detect, based on the aforementioned hazard detection mechanism, a potential hazard always earlier than a factual hazard), the above-mentioned emergency route generation and usage strategy may be able to provide the first autonomous vehicle always with required emergency route possibilities even prior to an actual detection of a factual hazard, leading to the effect that potential standby times for calculating emergency routes in case of need (that is, at the time of factual hazard detection) can be effectively avoided.

At the same time, the above-mentioned process steps allow for an efficiency improving and continuous allocation of required exclusive safety areas within the system. Accordingly, as each of the above-mentioned steps is dependent on a previous detection of corresponding hazard levels assigned to a given (first) autonomous vehicle and a at least one object, which is, as stated before, preferably conducted in a continuous fashion within the proposed system, also the above-mentioned process steps may be preferably conducted continuously, e.g. in consecutive and predetermined time sequences, so as to effectively adapt to occurring changes detected within the system's environment. In the same way, also one or more of the respective steps may be preferably processed in parallel in case more than one of the aforementioned conditions may apply at a time, for example in case two or more objects may be determined to cause a 'potential hazard' or a 'factual hazard'. In that way, the external control centre and/or the one or more autonomous vehicles may in this case for example configured to calculate and assign a given one or more candidate routes and associated candidate safety areas for the first autonomous vehicles associated to a first object while, at the same time, the first autonomous vehicle itself may perform the route switching process for a second object associated to a 'factual hazard' detection. Further, also several candidate route generation processes and/or route switching processes may be conducted at the same time.

### Candidate route generation process

The following content may provide further information and/or description of possible embodiments of the candidate route generation process conducted by the external control centre and/or the one or more autonomous vehicles of the proposed system after performing hazard detection and generating the different hazard levels associated to a recognized object and a given autonomous vehicle. Herein, it is again referred to a first autonomous vehicle in case a given process step may be assigned to an arbitrary single autonomous vehicle out of the one or more autonomous vehicles existing within the system.

Accordingly, as stated above, the respective candidate route generation process may be preferable conducted by the external control centre and/or the one or more autonomous vehicles in case a change in the system's environment, that is, preferably, a given object, is recognized to be a 'potential hazard' for a given first autonomous vehicle in view of the hazard detection process priory performed by the system. At that, the respective candidate route generation process may primarily aim to generate one or more emergency routes, also called 'candidate routes' hereinafter, for the first autonomous vehicle so as to efficiently avoid threats, such as a collision of the first autonomous vehicle with the object, in case the change in the environment may become a 'factual hazard' at some point, while, at the same time, associated candidate safety areas may be assigned to the candidate routes so as to enable an adaptive and hazard dependent safety area allocation mechanism.

On that account, in a first preferable embodiment of the respective candidate route generation process, the generation/calculation of the one or more candidate routes may be preferentially conducted prior to the calculation and assignment of the associated candidate safety areas.

Herein, the one or more candidate routes may be specifically calculated based on a number of environment, that is, object-specific information particularly concerning properties of the object being determined as a 'factual hazard', system-internal information including vehicle-specific characteristics as well as predetermined candidate route calculation algorithms implemented in the external control centre and/or the one or more autonomous vehicle and to be fed with the above-mentioned information for determining different optional candidate routes.

Based on this, in a preferable embodiment, the calculation of the one or more candidate routes may, for example, comprise at least the calculation of a first and a second candidate route for the first autonomous vehicle, wherein preferentially, the first and the second candidate routes may be different from the initial route of the first autonomous vehicle and wherein the first and the second candidate routes may be calculated by implementing the information regarding the object and the system-internal information into a first and a second candidate route calculation algorithm.

On that account, the first candidate route calculation algorithm may be, for example, implemented in such way that the respective first candidate route to be calculated for the first autonomous vehicle and output by the first candidate route calculation algorithm may continually keep a maximum distance of the first autonomous vehicle to the potential hazard represented by the associated object. Thus, as an example, using the first candidate route calculation algorithm, the first candidate route may be generated by determining alternative routes for the first autonomous vehicle to move which, preferably, facing away from the position of the respective potential hazard or, for example, the position at which the respective potential hazard may become a factual hazard.

In contrast, the second candidate route may be conversely defined, as an output of the second candidate route calculation algorithm, so as for the first autonomous vehicle to keep a predefined distance to the potential hazard while, at the same time, the second candidate route may be further ultimately realigned, if possible, with the initial route of the first autonomous vehicle. Here, as an example, to realize the second candidate route, the second candidate route calculation algorithm may be preferably configured to implement an evasion curve into the second candidate route to dodge a potential hazardous collision event while further forming the second candidate route in such way that the second candidate route thereinafter again connects to the initial route assigned to the respective initial route.

Thus, by providing the second candidate route, a potential emergency route may be generated which allows for a minimal change of the vehicle's initial route, thus leading to an efficiency-focused route alternative, while the first candidate route may be defined so as to ensure a maximal safety for all entities within the system.

Further, concerning the possible information required by the external control centre and/or the one or more autonomous vehicles to calculate the one or more candidate routes, preferably by means of at least one of the above-mentioned candidate route calculation algorithms, the external control centre and/or the one or more autonomous vehicles may be configured to receive specific information regarding the object associated with the potential hazard and the first autonomous vehicle for which the one or more candidate routes are to be calculated and calculate the respective candidate routes based on different, pre-determined relations extractable by said information.

As an example, in a preferred embodiment, the external control centre and/or the one or more autonomous vehicles may be able to calculate the at least one candidate route based on the relative position of the corresponding object to the first autonomous vehicle, wherein the relative position may define one of the above-mentioned relations and can be extracted by the external control centre and/or the one or more autonomous vehicle by receiving positional information of the corresponding object and the first autonomous vehicle for candidate route calculation. For this, the external control centre and/or the one or more autonomous vehicle may be, for example, specifically configured to retrieve such information by accessing a storage space, such as the storage space mentioned for initial route calculation and hazard detection, presently storing information regarding detected objects and currently used autonomous vehicles and thereinafter implement said retrieved information into an internal relation conversion module capable of calculating the required relation (based on the retrieved information) for the respective route calculation.

Based on this, a preferable candidate route calculation process based on the relative position of the object and the first autonomous vehicle as an exemplary relation parameter may for example lead to different candidate route orientations depending on the side of the first autonomous vehicle at which the object is currently present. As an example, in case the respective object may be identified on the left side of the first autonomous vehicle, the external control centre and/or the one or more autonomous vehicles may be configured, based on the underlying one or more candidate route calculation algorithms, to calculate/determine an appropriate candidate route that is orientated to the right side of the first autonomous vehicle, preferably so as to securely avoid any potential threat caused by the corresponding object. Vice versa, the same technique may be preferably likewise applied in case of other relative positions of the object so that, for instance, in case of a right-sided object, a left-sided candidate route may be preferred or, in case of an object in front of the first autonomous vehicle, a candidate route strictly orientated to the sides or even to the vehicle's back may be prioritized.

As a consequence, based on the fact that the corresponding candidate route calculation process may account specific and predetermined relations between the respective object and the first autonomous vehicle, each of the so generated candidate routes can be generated in an effective and, specifically, adaptive way, thus resulting in a more efficient generation of emergency route while, at the same time, less candidate routes and associated exclusive safety area allocations are required to provide for a secure moving routine of each of the respective autonomous vehicles.

In addition, in a further preferable embodiment, the above-mentioned calculation of corresponding candidate routes may additionally be supplemented not only by using information and/or relations of the corresponding object and the first autonomous vehicle relating to present characteristics of the environment but also such information and/or characteristics which may be anticipated for the (near) future.

Accordingly, in the given embodiment, the external control centre and/or the one or more autonomous vehicles may be equally configured to calculate and determine the one or more candidate routes based on an anticipation, that is, based on a prediction of the object's movement so as to further improve the precision of the respective candidate route calculation output.

On that account, in a preferable example, the external control centre and/or the one or more autonomous vehicles, particularly the above-mentioned candidate route calculation algorithms implemented therein, may be likewise configured, for a corresponding candidate route calculation, to perform an initial prediction calculation process, for example by conducting an extrapolation mechanism on the object's data, and thereinafter utilize the predicted output, such as a predicted location of the corresponding object at a predetermined yet prospective point in time, for the actual calculation of the corresponding candidate routes. In this way, not only the safety within the corresponding cooperative system may be further improved, particularly as each of the autonomous vehicle may be equipped with a number of different emergency routes being considered for any potential behaviour of the associated object, but also the precision and efficiency of the respective candidate calculation procedure may be further enhanced, specifically as consecutive extrapolation analysis and outputs may allow for an earlier and more precise description of the objects future movements.

### Calculation and assignment of the associated candidate safety area

Further, after successfully calculating the respective one or more candidate routes, the external control centre and/or the one or more autonomous vehicles may be further configured to calculate and store a corresponding exclusive safety area, hereinafter also referred to as 'candidate safety area', to each of the calculated candidate routes, predominantly so as to ensure a continuous and safety travel of the first autonomous vehicle even it is moving along one of the calculated candidate routes.

Herein, the respective candidate safety areas may preferable hold the same characteristics as the exclusive safety areas priory associated to each of the initial routes assigned to the one or more autonomous vehicles, resulting in the effect that a candidate safety area may be equally seen as an assigned safety area of a corresponding autonomous vehicle (herein, the first autonomous vehicle), in which the movement of the corresponding autonomous vehicle should be, under normal conditions, secured, predominantly by forcing the one or more autonomous vehicles (including the first autonomous vehicle) to halt its movement whenever an object is found to be stepping into the assigned safety area (see further conditions below).

As a consequence, the parameter and conditions under which a candidate safety area associated to a given candidate route may be calculated in the present invention may be, in a preferable embodiment, preferentially the same already described for the exclusive safety area associated to a prior initial route. That is, in case a given candidate route may be sufficiently calculated, the external control centre and/or the one or more autonomous vehicles may be preferably configured, in line with the processes of the exclusive area manager for the exclusive safety area, to equally calculate and assign a given candidate safety area associated to a candidate route by allocating a predetermined area around the candidate route comprising a predefined size, include additional system or time-dependent parameters for safety area determination, so as to further define the size or shape of the corresponding candidate safety area, or even generate a candidate safety area that moves along the first autonomous vehicle while traversing the candidate safety route and equally having a predefined size and shape.

Further, after sufficiently calculating the respective one or more candidate routes and associated candidate safety areas, the external control centre and/or the one or more autonomous vehicles may be subsequently configured to assign the respective routes and safety areas to the corresponding first autonomous vehicle, preferentially by storing the at least one candidate route and the associated candidate safety area in a predetermined storage space (e.g. again any of the potential storage spaces described for the initial route calculation process) and, for example, assigning the so generated instructions with a vehicle specific marker, such as with a vehicle specific ID. In this way, it may be specifically possible for the first autonomous vehicle to efficiently retrieve the information and instructions contained within the candidate route and associated candidate safety area, particularly since each of the calculated routes and safety areas may already be intrinsically organized within the existing system.

In addition, in a further preferable embodiment, it may be equally possible that the external control centre and/or the one or more autonomous vehicles may, preferentially after storing the respective candidate route and associated exclusive candidate safety area, likewise configured to add the area of each of the stored exclusive candidate safety areas to the area currently assigned to the exclusive safety area of the respective first autonomous vehicle. In this way, it may be specifically possible to further increase the efficiency and security of the one or more autonomous vehicles within the system, particularly as by appending each of the safety areas associated to a potential emergency route to be used by an autonomous vehicle to the vehicle's exclusive safety area even prior to the actual act of emergency route usage, the area in which the autonomous vehicle is supposed to move in case of emergency conditions is already priory allocated to, that is, secured for the corresponding autonomous vehicle. At the same time, with this, also no additional security instructions must be introduced to the autonomous vehicles in case a given object is located in an existent candidate route space, specifically since the autonomous vehicle is already preferably configured to halt its movement in case an object is located in the assigned exclusive safety area.

In addition, in a further preferable embodiment, the external control centre and/or the one or more autonomous vehicles may be, even after successfully storing the respective candidate routes and associated candidate safety areas to a corresponding storage space, also configured to further manage and/or update the stored candidate routes and candidate safety areas and thereby dynamically change both the form of the currently used exclusive safety area as well as the availability of usable candidate routes and exclusive candidate safety areas to be used by an autonomous vehicle. For this, the external control centre and/or the one or more autonomous vehicles may be, for example, preferably configured to delete and/or update a given stored candidate route and the associated exclusive candidate safety area, preferably in case predetermined conditions are fulfilled within the system, and potentially further adapt the exclusive safety area assigned to the autonomous vehicle associated to the deleted and/or updated route and safety area in accordance with the conducted deletion and/or update processes.

On that account, in one preferred embodiment, it may for example possible that the external control centre and/or the one or more autonomous vehicles may be configured to delete and/or update a respective candidate route and the associated candidate safety area whenever a given predetermined change in the environment may be detected (e.g. in case a recognized objected being associated with a given hazard level may move, resulting to a change of its previous hazard level) and/or a predefined time (after storage) has been elapsed. In addition, in another preferred embodiment, the external control centre and/or the one or more autonomous vehicles may be likewise configured to adapt the exclusive safety area currently used by an autonomous vehicle assigned to a deleted and/or updated candidate route or exclusive candidate safety area based on the respective deletion and/or update, preferably by likewise deleting and/or updating an area previously added to the exclusive safety area of the autonomous vehicle. Here, as an example, a preferably adaption of a present exclusive safety area may exemplary include the deletion of an area associated to a deleted exclusive candidate safety area previously added to the exclusive safety area of an autonomous vehicle (e.g. in case each of the stored exclusive candidate safety areas may be previously added to the vehicle's exclusive safety area after candidate route calculation). In another example, in case of an updated, that is, changed exclusive candidate safety area, also the area previously added to the exclusive safety area of the respective autonomous vehicle may be changed to the updated characteristics of the exclusive candidate safety area. In this way, it may thus be possible to efficiently and dynamically update and align the areas assigned to each exclusive safety area existing in the system, resulting in the effect that a fast and secure response to given changes within the system's environment can be maintained.

### Internal candidate route selection mechanism

Moreover, in another preferable embodiment of the present invention, it may be equally possible that the respective candidate routes and associated candidate safety areas may likewise undergo an additional candidate route selection mechanism, preferably even prior to the above-mentioned storage step, so as to likewise further allow for the possibility to filter out ineffective or even prohibited candidate routes calculated by the external control centre and/or the one or more autonomous vehicles and thus to further improve the efficiency and preciseness of the underlying candidate calculation proceeding.

On that account, in an additional preferable embodiment, it may be possible that the external control centre and/or the one or more autonomous vehicles that have been calculated the respective candidate route and associate candidate safety area for the fist autonomous vehicle may be further configured to perform an additional selection process for the calculated candidate routes and candidate safety areas and thereinafter only store such candidate routes and associated candidate safety areas which are permitted by within the selection process.

Herein, the respective selection process itself may preferentially performed by the external control centre and/or the one or more autonomous vehicles based on a number of selection parameters further defining the usability of a given candidate route and/or candidate safety area. For example, within the respective selection process, the external control centre and/or the one or more autonomous vehicles may be preferably configured to analyse predetermined characteristics of a respective candidate route and/or the associated candidate safety area and may permit only such routes and safety area for subsequent storage which characteristics may fulfil predefined conditions implemented in the selection process. As an example, the respective selection process may include the analysis of the length of the candidate route, the time the respective first autonomous vehicle is required to move along the candidate route or the amount of safety area required for this route and only permits subsequent storage of the respective candidate route and associated candidate safety area in case at least one or, preferentially, all of the analysed characteristics succeed a predefined threshold value.

As a consequence, using the above-mentioned additional selection process, calculated candidate routes and candidate safety areas which may potentially not fulfil a predetermined standard set in the underlying management system may be herewith effectively filtered out, thus further improving the efficiency and preciseness of the underlying system by effectively conditioning the emergency route and safety area allocations.

In addition, the above-mentioned selection mechanism may be preferably likewise used to further align the calculated candidate routes and associated candidate safety areas with the initial and candidate routes and safety areas already present within the system.

Specifically, since in cooperative system it may lead to security problems in case a given autonomous vehicle may share a part of an initial route, a candidate route or one of the associated safety areas, predominantly as in such cases collisions of the respective vehicles may not be totally avoidable, the respective selection mechanism may be likewise preferably used to filter out calculated candidate routes and associated candidate safety areas which may, even partly, fall under an already existing (that is, used and/or stored) initial route, candidate route and/or associated safety area of the system.

On that account, an additional embodiment of the above-mentioned candidate route selection process may equally comprise a mechanism by which potentially insecure candidate routes and associated candidate safety areas may be filtered out before storage.

For this, in a preferential example, the external control centre and/or the one or more autonomous vehicle may be further configured to send an additional request to store a respective candidate route and associated candidate safety area to the exclusive area manager of the external control centre, predominantly so as to let the corresponding exclusive area manager perform the safety inspection mechanism mentioned above, and only store the respective candidate route and associated candidate safety area in case the external control centre and/or the one or more autonomous vehicles receive a corresponding storage permission message from the exclusive area manager, preferably in response to an acceptance of the exclusive area manager after safety inspection.

Herein, the safety inspection mechanism of the exclusive area manager may be, preferably, processed by the exclusive area manager in a similar way the exclusive area manager may define the exclusive safety area of an associated initial route mentioned above. Specifically, the exclusive safety area may be again preferably configured to store and/or retrieve information regarding already existing, that is, stored initial routes, candidate routes and associated candidate and/or exclusive safety areas (preferably, in a similar way described for the calculation of the exclusive safety areas mentioned before) and thereinafter only transmit a corresponding storage permission message to the external control centre and/or the one or more autonomous vehicles, in case the characteristics of the respective candidate route and associated candidate safety area sent to the exclusive area manager for safety inspection may fulfil a number of predetermined conditions, preferably based on the aforementioned stored route and safety area information.

On that account, in a preferential embodiment of the above-mentioned safety inspection mechanism, the external area manager may be for example configured to retrieve information of currently stored exclusive safety areas and candidate safety areas existing within the system, wherein the respective information may be preferably the present and/or time-dependent locations of the respective safety areas, compare these information with the characteristics, that is, the calculated locations, of the candidate safety area to be inspected by the exclusive area manager and only transmit a corresponding storage permission message to the external control centre and/or the one or more autonomous vehicles, in case the respectively inspected candidate safety area does not overlap with any of the currently stored exclusive safety areas and candidate safety areas.

As stated, in this way it might be efficiently avoided that a given autonomous vehicle may collide with any other autonomous vehicle in the system, even if the given autonomous vehicle may be required to move along one of the provided candidate safety routes, specifically as with a preselection (that is, prefiltering) of candidate routes sharing even only a part of the same safety area with another already existing initial or candidate route, any (even potential) hazardous convergence between two autonomous vehicles can be completely prevented.

In addition, the above-mentioned mechanism may likewise allow for an additional increase of adaptability of the overall autonomous vehicle management system.

For instance, it may be equally possible that the aforementioned route inspection mechanism may not only include the determination and selection of new candidate routes and associated candidate safety areas to be stored for a given autonomous vehicle, but that it can be likewise used to further adapt and improve the overall assignment and usage of moving routes included in the provided system.

On that account, in an additional and preferred embodiment, it may be equally possible that the exclusive area manager performing the above-mentioned security inspection mechanism may not only be configured to output (or not output) a given storage permission message to the external control centre and/or the one or more autonomous vehicles after detecting an sufficiency/insufficiency of the corresponding candidate route or associated candidate safety area, but the detection may be likewise used to further adapt the definition or assignment of already present (that is, stored) routes and safety areas so as to generally improve the efficiency of the management system.

Accordingly, in an additional embodiment, the exclusive area manager may be, in some instances, in case it was detected during security inspection that a requested candidate safety area may solely overlap with a currently stored initial route and/or its associated exclusive safety area, configured to still transmit a storage permission message to the external control centre and/or the one or more autonomous vehicles (opposed to the above-mentioned embodiment) and yet instead delete the already stored initial route and associated safety area overlapping with the candidate safety area, while further reassigning a new initial route and associated exclusive safety area to the one or more autonomous vehicles the deleted initial route was assigned to.

Herein, this may specifically lead to a further improvement of the systems route allocation efficiency in some cases as with the additional possibility of reallocating already present movement routes and associated safety areas in case of need (that is, e.g. in case no other candidate safety route can be found for a given autonomous vehicle), present route allocations can be individually and dynamically adapted to environmental changes or new emerging requirements within the system.

Moreover, as an alternative or in addition to the above-mentioned procedures, in case the exclusive area manager may deem a given candidate route or associated candidate safety area not sufficient when conducting the above-mentioned security inspection mechanism, the route manager may be likewise preferably able to calculate an own alternative candidate route and the exclusive area manager may be able to calculate an associated alternative candidate safety area and, instead of not transmitting a corresponding storage permission message, send the alternative candidate route and the alternative candidate safety area to the corresponding external control centre and/or the one or more autonomous vehicles (while the external control centre and/or the one or more autonomous vehicles may be further configured to automatically store said alternative route and safety area for emergency avoidance). With this, additional standby times in the system may be efficiently avoided.

### Candidate route selection

Based on the aforementioned candidate route generation mechanism implemented in the proposed autonomous vehicle management mechanism, each of the present one or more autonomous vehicles may be therefore assigned with one or more emergency routes (the candidate routes) as well as associated safety areas (the respective candidate safety areas) stored for the respective autonomous vehicle while, at the same time, each of the stored emergency routes and safety areas may be preferably adapted and assigned to a specific potential hazard recognized before the respective change in the environment/the respective object may even become a factual hazard for the corresponding autonomous vehicle.

As a consequence, within the present invention, a corresponding avoidance strategy can be easily and efficiently performed, particularly by simply selecting one of the calculated and stored candidate routes and associated safety areas for a corresponding autonomous vehicle facing, at a determined time, an actual hazard by a given object and switching the initial route and safety area currently used by the autonomous vehicle to the selected candidate route and associated candidate safety area.

Accordingly, within a preferred embodiment of the proposed autonomous vehicle management system, a given autonomous vehicle, for example, the first autonomous vehicle mentioned above, may be further configured, in case a factual hazard was detected for the autonomous vehicle in a previous hazard detection step, to select one of the stored candidate routes and associated candidate safety areas assigned to the corresponding autonomous vehicle and, preferentially, to the corresponding object assigned to the detected factual hazard and apply countermeasures to the imminent hazard by changing its initial route and safety area with the chosen candidate route and candidate safety area (that is, the autonomous vehicle further moves along the chosen candidate route).

Herein, the identification of possible candidate routes and associated candidate safety areas to select upon may be efficiently conducted within the system. Particularly, since each of the respectively stored candidate routes and associated candidate safety areas are already assigned to a given autonomous vehicle and a predetermined/recognized object, a corresponding (first) autonomous vehicle facing a 'factual hazard' level object may be simply further configured to identify the object assigned to the present factual hazard and retrieve stored candidate routes and associated candidate safety areas assigned to the identified object from the predetermined storage space the respective route and area information were priory stored upon.

In addition, the selection of the respective candidate route and associated safety area to be used for hazard avoidance may be preferably based on a predetermined avoidance state internally defined and managed by the autonomous vehicle management system. For instance, the autonomous vehicle management system may comprise at least a 'security priority state' and a 'efficiency priority state' by which, depending on the state currently present in the autonomous vehicle management system, the selection of the corresponding candidate route and associated candidate safety area may be based upon. As an example, in case the first and the second candidate route of the first embodiment of candidate route generation process mentioned above may be existent and the autonomous vehicle management system is currently present in the efficiency priority state, the respective (first) autonomous vehicle may be configured to select the candidate route and safety area associated with the highest chance of avoiding the corresponding threat (that is, in the first embodiment, the first candidate route and safety area) while within the efficiency priority state, the autonomous vehicle may select the existing candidate route and safety area corresponding to the most efficient (e.g. fastest) way to still reach the destined location (i.e. within the first embodiment, the second candidate route and associated safety).

### Integration of vehicle priority and vehicle prohibition areas

In view of the above-mentioned mechanisms and strategies implemented in the present invention, it is thus understood that the proposed autonomous vehicle management system provides versatile ways to further improve the safety and efficiency of present cooperative system, predominantly as it allows for a fast and anticipatory method for generating countermeasures against potential hazards present in a system.

At the same time, since each of the proposed route and safety area generation mechanism is freely applicable to any kind of cooperative system, independent of the type or tasks assigned to the autonomous vehicles included in the system, the present invention may be even equally and efficiently implemented in close machining systems or even street-based delivery system normally including impassable or forbidden areas, specifically since the adaptive nature of the above-mentioned initial route and candidate route generation processes likewise allows for an inclusion of different environmental properties, in case of need.

On that account, in another preferred embodiment of the present invention, the autonomous vehicle management system may be equally and preferably capable of incorporating different local characteristics, such as allowable and forbidden traverse areas included in a corresponding environment of the system, into the respective mechanisms used in the present invention to calculate and assign the initial routes, candidate routes and their associated safety areas mentioned above.

For this, it may be for example possible that at least the external control centre, the one or more autonomous vehicles and/or one of their implemented elements may be further configured to store and access additional map data comprising two-dimensional information regarding the moving area in which the one or more autonomous vehicle are moving, wherein said two-dimensional information may include at least information regarding one or more vehicle priority areas defining movement areas within the respective environment of the system in which the one or more autonomous vehicles are allowed and/or supposed to move as well as one or more vehicle prohibited areas, which may define movement areas of the system in which the one or more autonomous vehicles are generally prohibited to move, hence describing a given system environment comprising different local characteristics.

In an additional step, at least the route planner of the external control centre may be further configured to likewise access said map data and calculate and assign at least a given initial route by referring to the map data and utilize only system locations which are defined as vehicle priority area within the map data. Vice versa, also the exclusive area manager of the external control center may perform the calculation of the respective exclusive safety areas in the same way, particularly by equally accessing the existing map data and utilizing only vehicle priority area locations for allocating a given exclusive safety area, resulting in the effect that each of the initial route and exclusive safety area allocations produced in the present invention can be efficiently assigned to specific predetermined moving areas in case of need.

In addition, the same local limitations may be preferably equally applied during calculation and assignment of the corresponding candidate routes and the associated candidate safety areas conducted after hazard detection by the external control centre and/or the one or more autonomous vehicle, preferentially by likewise limiting the allocation of said candidate routes and safety areas to locations associated in the respective map data to vehicle priority areas. In contrast, in a different embodiment, it may yet be equally possible that at least for calculating the respective candidate routes and candidate safety areas, locations corresponding to vehicle prohibited areas may be still permissible, preferentially so as to further increase the amount of potential emergency route possible for a given autonomous vehicle. As a consequence, within this embodiment, also the exclusive area manager performing the security selection mechanism for filtering out predetermined candidate routes and safety areas may be, for example, likewise configured to still send a storage permission message to the corresponding external control centre and/or the one or more autonomous vehicle, even in case the location of a given candidate route and/or associated candidate safety area may overlap with an existing vehicle prohibited area present in the map data.

Consequently, it is shown that the proposed autonomous vehicle management system of the claimed invention may comprise a multitude of benefits compared to management systems commonly used in cooperative environments.

In addition, due to the above-mentioned management system, also a plurality of autonomous vehicle management method steps may be originated, which neither can be provided nor could be disclosed by conventional autonomous vehicle management systems yet.

Herein, said method may be likewise preferably defined for dynamically managing a driving routine of a plurality of autonomous vehicles by an autonomous vehicle management system comprising at least an external control centre, one or more autonomous vehicles being communicatively connected to the external control centre and a route planner, wherein the external control centre may further comprise at least an exclusive area manager and the route planner may be included in the external control centre or the one or more vehicles. Additionally, the method may at least comprise the steps of:
- calculating and assigning, by the route planner, an initial route to the one or more autonomous vehicles and calculating and storing, by the exclusive area manager, an exclusive safety area for the initial route;
- autonomously moving, by the one or more autonomous vehicles, from a predetermined start point to a destination point based on the assigned initial route;
- detecting, by the external control centre and/or the one or more autonomous vehicles, changes of an environment around the initial route and determining at least one of a potential hazard or a factual hazard for the one or more autonomous vehicles moving along the assigned initial route;
- in case a change of the environment around the assigned initial route has been determined as a potential hazard, calculating, by the external control centre and/or the one or more autonomous vehicles, at least one candidate route being different from the assigned initial route and an exclusive candidate safety area associated to the at least one candidate route for a first autonomous vehicle of the one or more autonomous vehicle and storing the at least one candidate route and exclusive candidate safety area; and
- in case a change of the environment around the initial route has been determined as a factual hazard, selecting, by the first autonomous vehicle, one of the stored candidate routes;
- setting, by the first autonomous vehicle, the selected candidate route as a new initial route and setting the selected exclusive candidate safety area associated with the selected candidate route as the new exclusive safety area and;
- continue moving, by the first autonomous vehicle, along the new initial route.

Further, the method may also include
- Adding, by the external control centre and/or the one or more autonomous vehicles, the stored exclusive candidate safety area to the area assigned to the exclusive safety area of the first autonomous vehicle;
- sending, by the external control centre and/or the one or more autonomous vehicles to the exclusive area manager, a request for each calculated candidate route to store the respective candidate route and the calculated exclusive candidate safety area;
- storing, by the external control centre and/or the one or more autonomous vehicles, the at least one candidate route and exclusive candidate safety area only in case the external control centre and/or the one or more autonomous vehicles receive a storage permission message from the exclusive area manager;
- storing, by the exclusive area manager of the external control centre, information regarding each stored exclusive safety area and each stored exclusive candidate safety area; and
- transmitting, by the external control centre, the storage permission message to the external control centre and/or the one or more autonomous vehicles by accessing the stored information and transmitting the storage permission message in case the requested exclusive candidate safety area does at least not overlap with any of the stored exclusive safety areas and stored candidate safety areas.

### BRIEF DESCRIPTION OF THE DRAWINGS

Fig. 1a exemplary illustrates a schematic depiction of the allocation of exclusive safety areas in a cooperative system according to a first embodiment of the prior art;
Fig. 1b exemplary illustrates a schematic depiction of the allocation of exclusive safety areas in a cooperative system according to the present invention;
Fig. 2a exemplary illustrates a schematic depiction of the allocated exclusive safety areas according to the present invention at the time of potential hazard detection;
Fig. 2b exemplary illustrates a schematic depiction of the allocated exclusive safety areas according to the present invention at the time of candidate route calculation;
Fig. 2c exemplary illustrates a schematic depiction of the allocated exclusive safety areas and the allocated exclusive candidate safety areas according to the present invention at the time of candidate route selection;
Fig. 3 exemplary illustrates the composition of elements included in an autonomous vehicle and a control centre of the present invention according to a first embodiment;
Fig. 4 exemplary illustrates a flow chart including the general working principle of the autonomous vehicle management system according to predefined embodiment of the invention;
Fig. 5a exemplary illustrates the workflow of a hazard level determination according to a first embodiment;
Fig. 5b exemplary illustrates the workflow of a hazard level determination according to a second embodiment;
Fig. 6 exemplary illustrates the workflow of one of the one or more autonomous vehicles of the system to move along an initial route and dynamically allocate safety areas;
Fig. 7 exemplary illustrates the workflow of a candidate safety route calculation according to an embodiment of the present invention;
Fig. 8a exemplary illustrates the workflow of a movement prediction of a potential hazard;
Fig. 8b exemplary illustrates the movement prediction of Fig 8a using a human being and another vehicle as exemplary hazard objects;
Fig. 9a exemplary illustrates the workflow for calculating a first and a second candidate route according to an embodiment of the candidate calculation process of the invention;

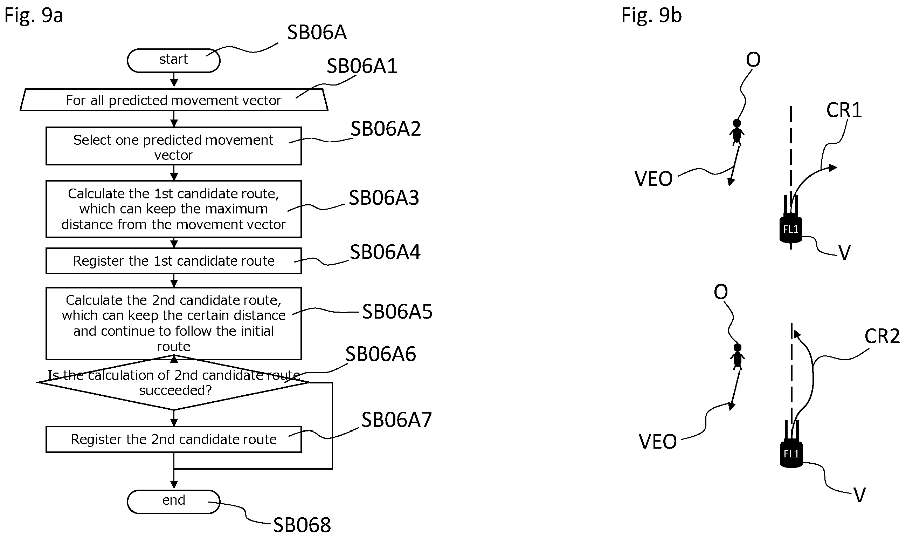

Fig. 9a exemplary illustrates the candidate routes generated by the workflow illustrated in Fig. 9a;

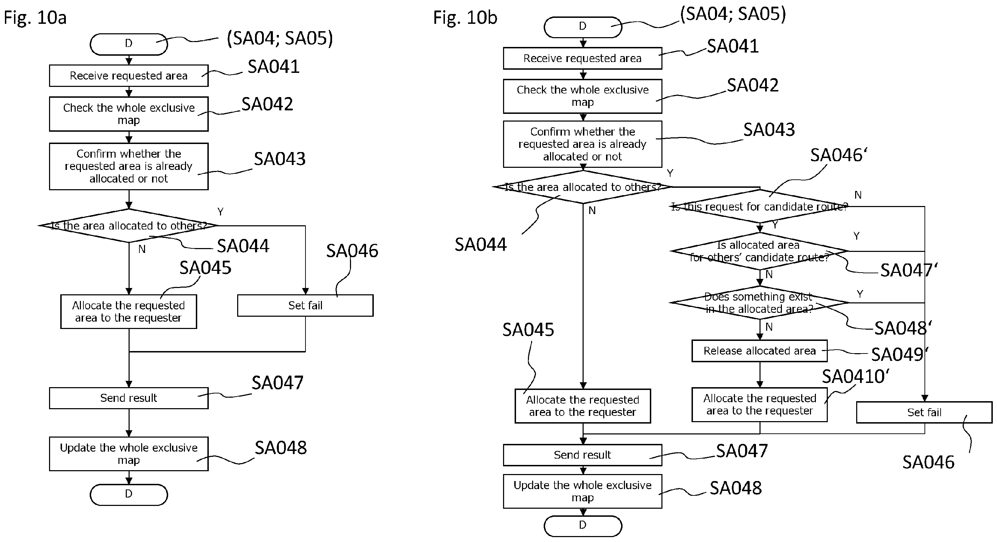

Fig. 10a exemplary illustrates a workflow for storing and allocating an exclusive safety area according to a first embodiment;
Fig. 10b exemplary illustrates a workflow for storing and allocating an exclusive safety area according to a second embodiment;

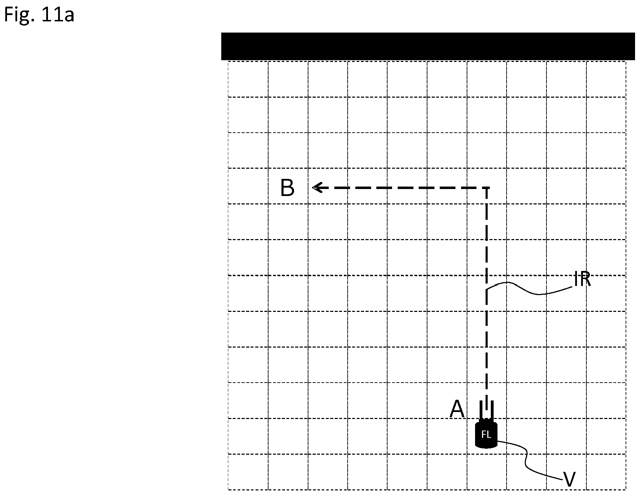

Fig. 11a exemplary illustrates a starting position of an autonomous vehicle being assigned with an initial route according to an embodiment of the present invention;

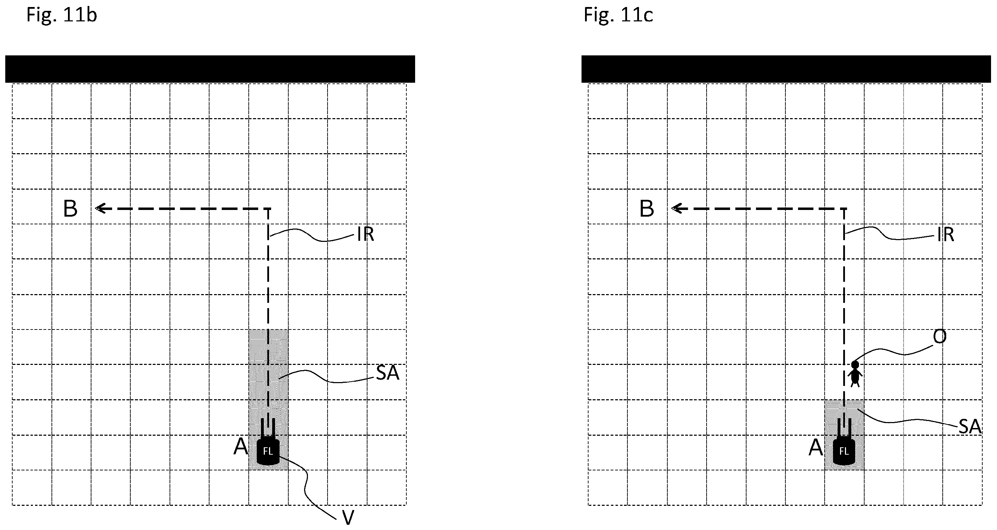

Fig. 11b exemplary illustrates the system of Fig. 11a with the allocated safety area of the autonomous vehicle visible;
Fig. 11c exemplary illustrates the system of Fig. 11a with the allocated safety area of the autonomous vehicle visible and an object stepping in the exclusive safety area;

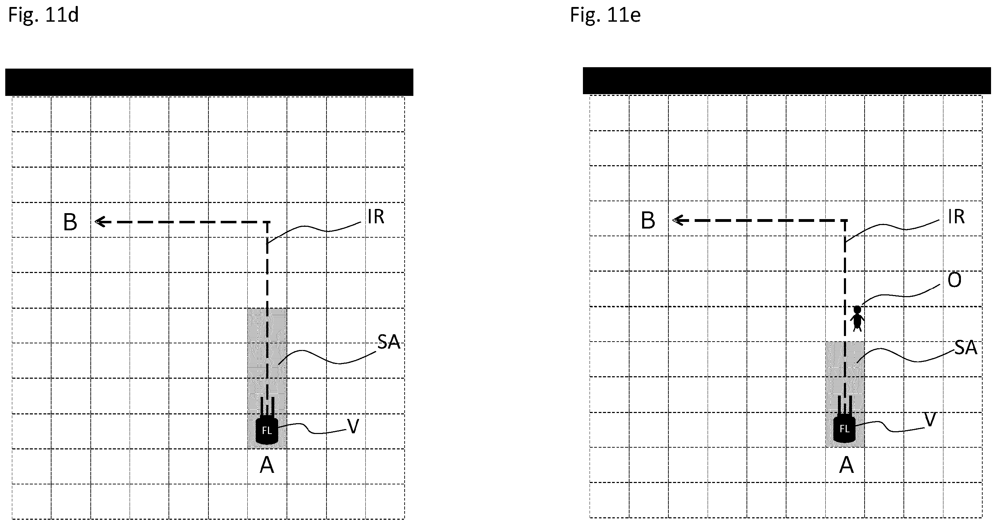

Fig. 11d exemplary illustrates the system of Fig. 11a with the autonomous vehicle travelling along the initial route;
Fig. 11e exemplary illustrates the system of Fig. 11d with the allocated safety area of the autonomous vehicle visible and an object stepping in the exclusive safety area;

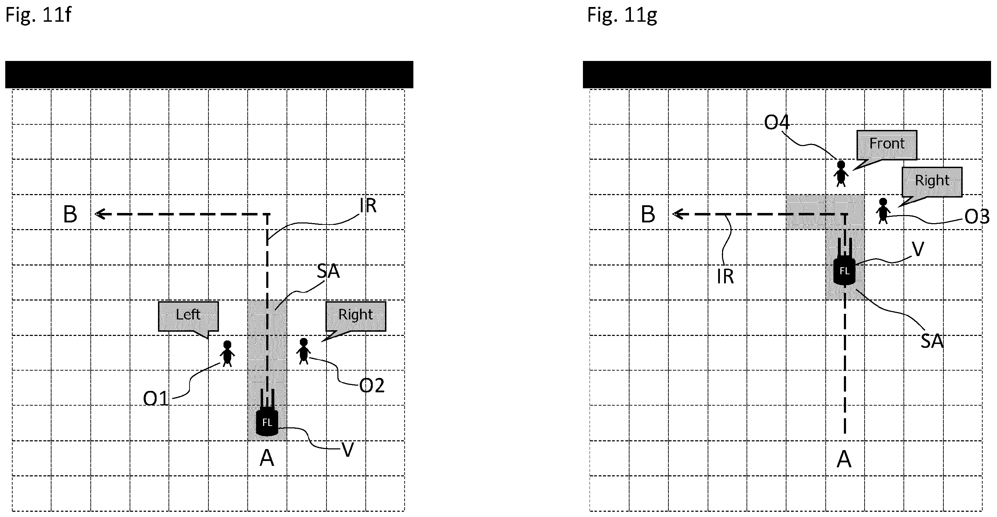

Fig. 11f exemplary illustrates the system of Fig. 11d with the allocated safety area of the autonomous vehicle visible and two object present in the left and right proximity of the autonomous vehicle;
Fig. 11g exemplary illustrates the system of Fig. 11d with the allocated safety area of the autonomous vehicle visible, the autonomous vehicle present in another location of the initial route and two object present in the front and right proximity of the autonomous vehicle;

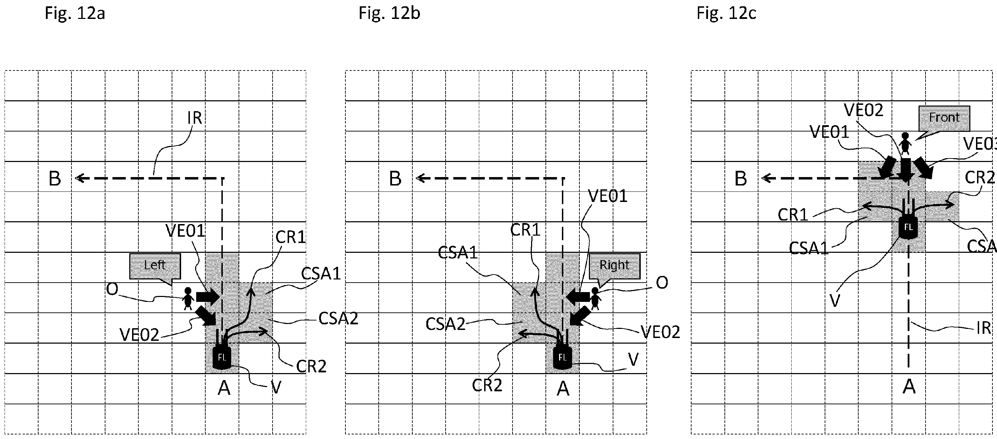

Fig. 12a exemplary illustrates the system of Fig. 11a with the allocated exclusive safety area and the candidate routes of the autonomous vehicle visible, wherein the allocated exclusive safety area comprises the original areas of the exclusive safety area and the areas of the calculated exclusive candidate safety areas and wherein the object assigned to the candidate routes is depicted on the left side of the autonomous vehicle;
Fig. 12a exemplary illustrates the system of Fig. 11a with the allocated exclusive safety area and the candidate routes of the autonomous vehicle visible, wherein the allocated exclusive safety area comprises the original areas of the exclusive safety area and the areas of the calculated exclusive candidate safety areas and wherein the object assigned to the candidate routes is depicted on the right side of the autonomous vehicle;
Fig. 12a exemplary illustrates the system of Fig. 11a with the allocated exclusive safety area and the candidate routes of the autonomous vehicle visible, wherein the allocated exclusive safety area comprises the original areas of the exclusive safety area and the areas of the calculated exclusive candidate safety areas and wherein the object assigned to the candidate routes is depicted on the front side of the autonomous vehicle;

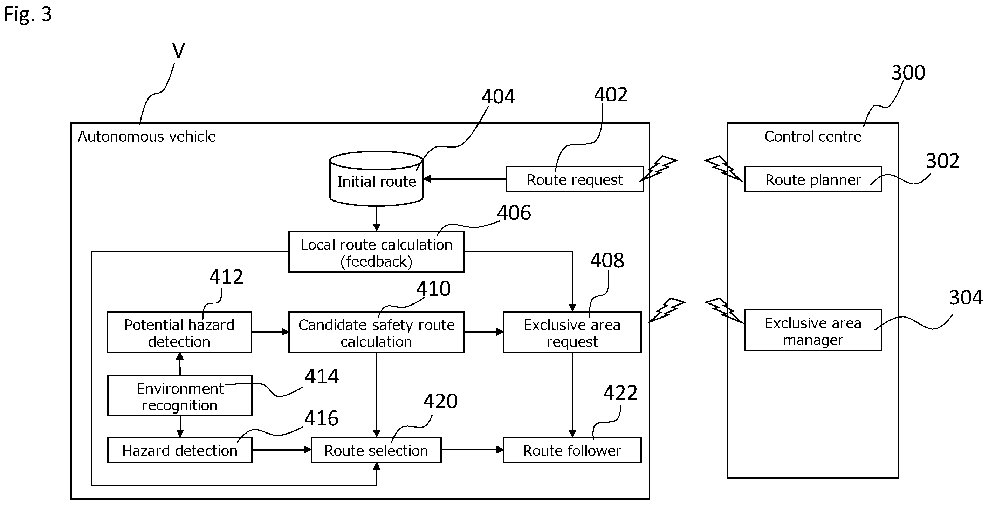

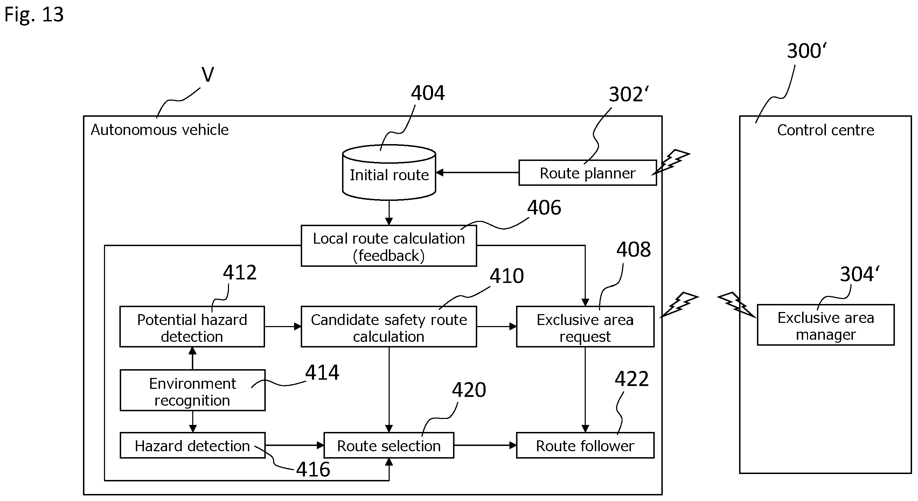

Fig. 13 exemplary illustrates another embodiment of the composition of elements of Fig. 3 in which the route planner is included in the one or more autonomous vehicles;

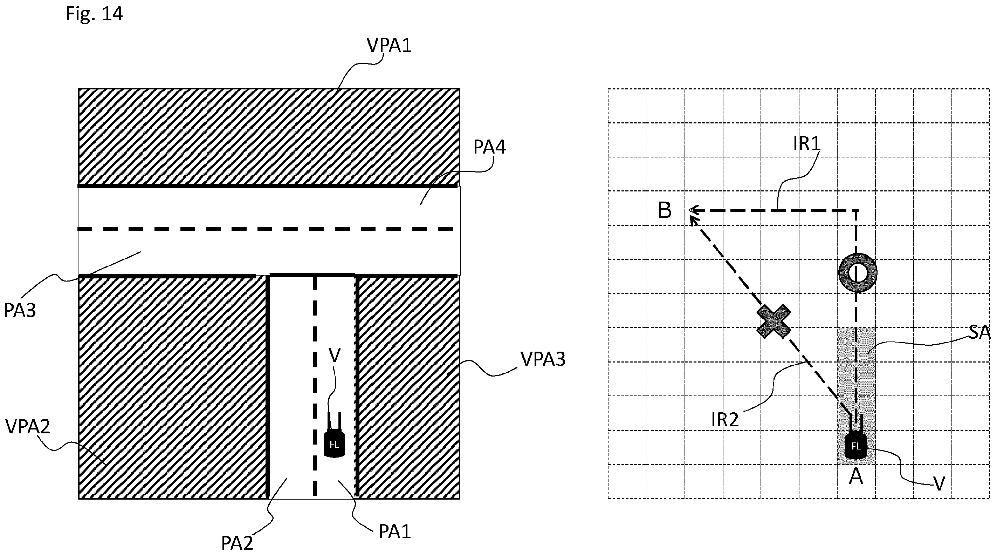

Fig. 14 exemplary illustrate the concept of including map data including vehicle priority areas and vehicle prohibiting areas for initial route calculation.

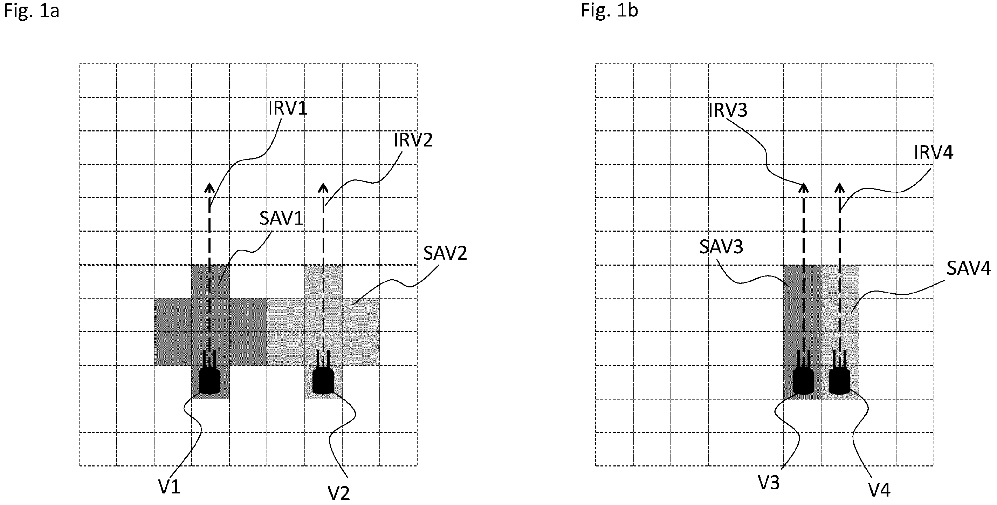

Figure 1a shows an exemplary illustration of a route and safety area allocation for two autonomous vehicles V1 and V2 according to a commonly used autonomous vehicle management system. Herein, the autonomous vehicles V1 and V2 are each assigned with a first and a second route IRV1 and IRV2 which the autonomous vehicles V1 and V2 are requested to travel, exemplary so as to fulfil a transportation request assigned to the autonomous vehicles. Further, both of the autonomous vehicles V1 and V2 are assigned with a predetermined exclusive safety area SAV1 and SAV2 defining the area in which the autonomous vehicles are required to halt their movement in case a given object, such as a human-being or another vehicle, may be introduced to the area, thus allowing for a avoidance of collisions when traveling along the assigned traveling route.

On that account, in conventional systems such as shown in Fig. 1a, allocation of exclusive safety areas are normally conducted in such way that potential emergency routes required for the autonomous vehicles V1 and V2 to move in case of imminent collision danger are automatically incorporated into the assigned exclusive safety areas, resulting in the effect that a safe travel of the autonomous vehicles may be enabled while yet, at the same time, normally a large system area is occupied by each of the exclusive safety areas SAV1 and SAV2 even in case no emergency actions are at all to perform by the autonomous vehicles. As a consequence, at least the area usage required by common autonomous vehicle management systems is still to be deemed inefficient.

Fig. 1b in contrast shows the allocations of general exclusive safety areas required for exemplary autonomous vehicles V3 and V4 according to the present invention in case the autonomous vehicles V3 and V4 are moving along their respective initial routes IRV3 and IRV4 while no additional hazard and/or object is considered to be around the autonomous vehicles V3 and V4. As can be seen, the respective exclusive safety areas SAV3 and SAV4 of the autonomous vehicles V3 and V4 are significantly smaller than such of the commonly used exclusive safety areas SAV1 and SAV2 shown in Fig. 1a, predominantly since the autonomous vehicle management system of the present invention stipulates to conduct a dynamic exclusive safety area allocation mechanism adding required additional safety areas only in case of need (e.g. in case a given detected hazard emerging from an object forces one of the present autonomous vehicles V3 and V4 to move along a provided emergency route). In this way, safety area allocation can be performed significantly more efficient, leading equally to an improved efficiency within the overarching cooperative system.

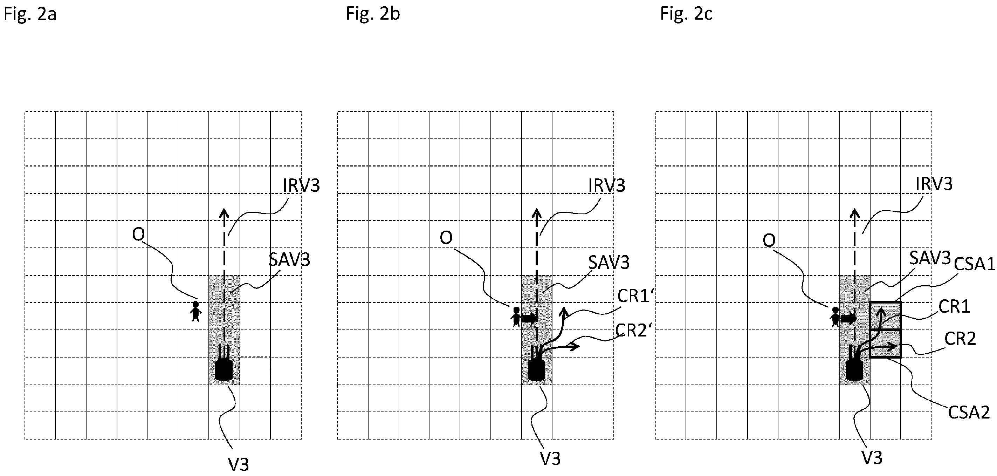

Fig. 2a to Fig. 2c further exemplary shows a general step-by-step illustration of the dynamic safety area allocation mechanism introduced by the present invention.

Herein, in Fig. 2a, the same autonomous vehicle V3 already shown in Fig. 1b may be used currently moving along its initially assigned initial route IRV3 and being assigned with its respective exclusive safety area SAV3. Further, in the shown situation, an object O delineated as a human traveling next to the autonomous vehicle V3 is present, defining a potential collision hazard for the autonomous vehicle V3. As a consequence, in order to avoid a potential collision while, at the same time, efficiently preventing the autonomous vehicle V3 to halt its current movement, the autonomous vehicle management system may be configured, at a time prior to the detection of an actual hazard event (e.g. in case the object O enters the exclusive safety area SAV3 of the autonomous vehicle V3), to dynamically calculate anticipatory emergency routes (so called 'candidate routes', CR1 and CR2 shown in Fig. 2b) and allocate additional exclusive candidate safety areas (CSA1 and CSA2 in Fig. 2c) to be added to the exclusive safety area SAV3 of the autonomous vehicle V3 and associated to the calculated emergency routes CR1 and CR2 to the autonomous vehicle V3, resulting in the effect that a more efficient yet likewise safety ensuring safety area allocation mechanism can be provided.

Fig. 3 shows further an preferable embodiment of the elements included in the proposed autonomous vehicle management system of the present invention as well as their preferable compositions.

Herein, specifically, the proposed autonomous vehicle management system may at least comprise one or more autonomous vehicles V capable of traversing through a predefined area of the system as well as a control centre 300 comprising, in this embodiment, at least the route planner 302 as well as the exclusive area manager 304. Further, in order to move the one or more autonomous vehicles V, each of the autonomous vehicles V may preferably requires movement instructions included in an initial route (exemplary illustrated herein by element 404) which, in the embodiment of Fig. 3, is received by the autonomous vehicle V by initially sending a route request 402 to the route planner 302 of the external control centre, predominantly by using a predefined communication connection, and thereinafter receiving an initial route 404 assigned to the respective autonomous vehicle V by the route planner 302. The initial route 404 itself may further include all necessary instructions, such as time, speed, starting location, end location and the way the autonomous vehicle V is instructed to move while the autonomous vehicle V is further automatically configured to carry out the instructions included in the initial route.

In addition, as for the dynamic adjustment of the initial route including performing dynamic emergency (that is, candidate) route calculation, additional exclusive candidate safety area allocation and switching to emergency routes in case of need, each of the one or more autonomous vehicles can further comprise a local route calculation feedback loop represented by element 406 in Fig. 3.

At it, the local route calculation feedback loop 406 may comprise several functions and/or mechanisms performed in the present embodiment of Fig. 3 by the respective autonomous vehicle V itself (or, respectively, one or more modules included in the autonomous vehicle V) while, in other embodiments, such functions and mechanism can be equally conducted by other elements of the proposed autonomous vehicle management system, such as the external control centre 300, or partly conducted by the vehicle V and the external control centre 300 in parallel. On that account, when receiving an initial route 404 from the control centre 300, the local route calculation feedback loop 406 may start with initially retrieving an exclusive safety area associated to the initial route 404. For this, the autonomous vehicle V may transmit the exclusive area request 408 to the exclusive area manager 304 communicatively connected to the autonomous vehicle V and receive the associated exclusive safety area after the exclusive area manager 304 calculated, stored and assigned said exclusive safety area to the respective autonomous vehicle V.

At the same time, in order to perpetually be able to account for hazardous confrontations while moving along the initial route 404, the autonomous vehicle V is continually calculating, storing and updating new emergency routes, so called candidate safety routes, and associated exclusive candidate safety areas by means of a perpetual feedback loop of the local route calculation feedback loop 406, which is delineated by the elements 408, 410, 412 and 416 of Fig. 3. Specifically, said feedback loop comprises at least the continuous act of recognizing environmental changes, that is, objects existing around the initial route 404 of the autonomous vehicle V (defined by the environment recognition element 414) and the subdivision of the recognized objects into different hazard levels describing the presently anticipated hazardousness of the object. Moreover, depending on the outcome of the detection, the respective feedback loop further continues either with the adaptive calculation of additional candidate safety routes and additional associated exclusive candidate safety areas or the selection of a given candidate safety route and safety area for collision avoidance.

More specifically, in case the hazardousness of a given recognized object is determined to be a potential hazard (defined by the 'potential hazard detection' element 412 of Fig. 3), that is, an object that may become an actual hazard in a predetermined amount of time, the autonomous vehicle V may conduct an additional candidate route calculation step represented by the 'candidate safety route calculation' element 410 of Fig. 3 in which emergency routes to be used to avoid the object (in case it becomes an actual hazard at time) are calculated and stored in reference to the respective autonomous vehicle V. In addition, in that time, also additional exclusive candidate safety areas associated to the calculated candidate routes are generated and preferably allocated to the autonomous vehicle V (herein, by again requesting the calculation exclusive area manager 304 of the external control centre 300 to calculate appropriate exclusive candidate safety areas using the exclusive area request 408) so as to allow for a dynamic and adaptive generation of safety areas for each autonomous vehicle V within the system.

In contrast, in case a given object was determined to be an actual hazard (hereinafter also defined by the hazard level of 'factual hazard', defined by the hazard detection 416 of Fig. 3), that is, in case the object unambiguously defines a threat to the autonomous vehicle V, the autonomous vehicle V may perform a adaptive route selection 420 by which the autonomous vehicle V may choose from one of the previously stored and assigned candidate routes and associated exclusive candidate safety areas and thereinafter conducts collision avoidance by switching its active route movement to the instructions included in the selected candidate route (defined by route follower 422, that is, the autonomous vehicle V then follows the candidate route instead of the initial route).

Therefore, with this, a continuous, adaptive and efficient route and safety area allocation strategy can be provided.

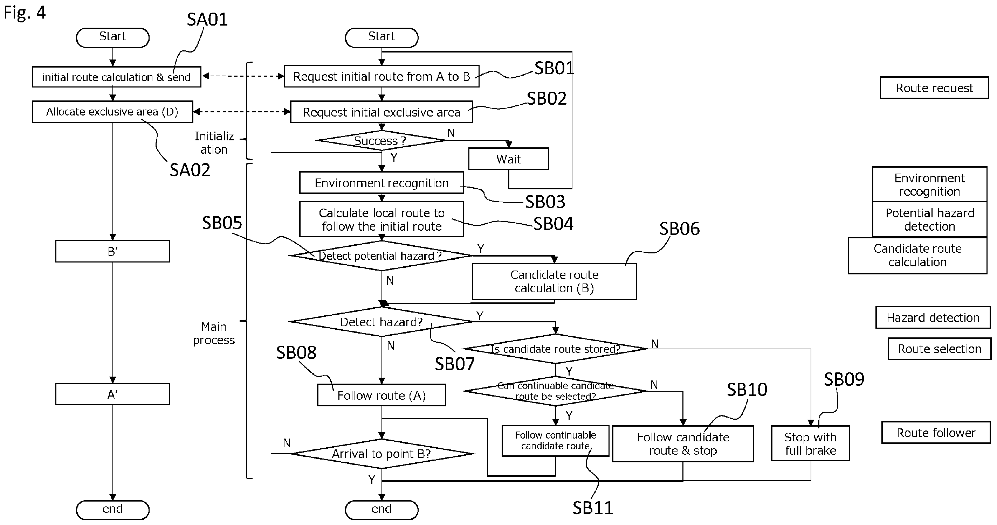

Fig. 4 shows the above-mentioned workflow of the embodiment of the present invention according to Fig. 3 again in a step-by-step flow sheet illustration. Herein, the left side of the illustration may define the process conducted by the external control centre 300 while the right side defines the processes conducted by at least one of the one or more autonomous vehicles V of the system. Again calculation of candidate routes and associated exclusive candidate safety areas are herein processed by the one or more autonomous vehicles V but can be likewise preferably conducted by other elements of the systems in other embodiments.

Accordingly, in order to start the movement of the autonomous vehicle V, in step SB01, the autonomous vehicle V may initially request to receive instruction regarding an initial route to move from a starting point A to a destined location B from the route planner 302 of the external control centre 300.

In response, the route planner 302 of the external control centre 300 receives the request from the autonomous vehicle V and calculates an appropriate initial route in step SA01 and sends the initial route including instructions back to the autonomous vehicle V.

In step SB02, the autonomous vehicle V further requests an exclusive safety area associated with the received initial route from the exclusive area manager 304.

In response, in step SA02, the exclusive area manager 304 receives the request and calculates an associated exclusive safety area, which is then send back to the autonomous vehicle V. Thereinafter, the autonomous vehicle V receives the associated exclusive safety area and stores and/or allocates both, the initial route and the exclusive safety area in reference to the autonomous vehicle V. During this time, it may be preferably forbidden for the autonomous vehicle V to move until the reception, storage and/or allocation of the initial route and the exclusive safety area is sufficiently performed.

Thereinafter, the autonomous vehicle V may move along the assigned initial route. During this time, the above-mentioned adaptive candidate route and exclusive candidate safety area calculation and hazard avoidance mechanism may be continually conducted including the following steps.

In step SB03, environment recognition is performed by the autonomous vehicle V. That is, the autonomous vehicle V conducts detection of present changes of the environment, e.g. detections of objections existing along the initial route.

At the same time, shown by step SB04, the autonomous vehicle V may continually access the instructions included in the initial route and perform adaptions to the vehicle's present characteristics (e.g. change velocity, direction etc. of the vehicle V) so as to follow the initial route.

Further, in step SB05 it is determined whether, based on the environment recognition conducted under step SB03, a potential hazard may exist in the proximity of the autonomous vehicle V. In case such a potential hazard exists, the autonomous vehicle V conducts candidate safety route calculation SB06 including the calculation, assignment, storage and potential allocation of one or more candidate routes and associated exclusive candidate safety areas for avoiding potential collisions caused by the potential hazard.

Further, in case no potential hazard was found, it is assessed by the autonomous vehicle V if a factual, that is, an actual hazard was found in step SB07.

In case no factual hazard was found, the autonomous vehicle V is further moving along the initial route in step SB08 and repeating the above-mentioned detection steps until it arrives at the predetermined location.

In contrast, in case a factual hazard was determined in step SB07, the autonomous vehicle further assesses whether an appropriate candidate safety route is stored and assigned to the respective hazard object.

In case no appropriate candidate route was stored, the autonomous vehicle V lastly conducts a full brake and thus avoid a given collision by fully halt its movement (step SB09).

Instead, in case an appropriate candidate route is stored, it may be further detected if the respective candidate route can be fully continued or if another threat may exist within the proximity of the selectable stored candidate route and, in case it was determined that the stored candidate route can be followed continually (step SB11), the autonomous vehicle V may select the candidate route and follow the candidate route until the destined location is reached while, else, the autonomous vehicle may select and follow the respective candidate route and then stop at a predetermined location.

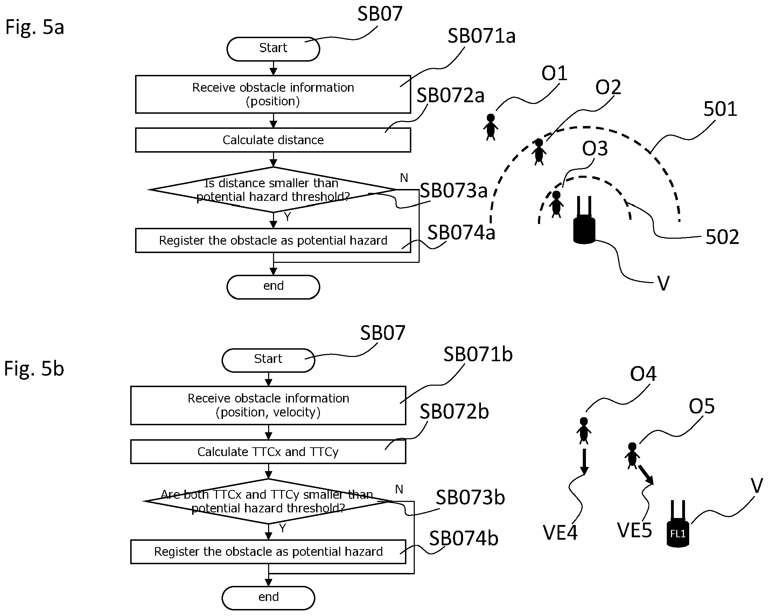

Fig. 5a shows further an exemplary embodiment of the potential hazard detection mechanism illustrated under step SB05.

Specifically, in this embodiment, a potential hazard may be determined by determining the distance of a given recognized object O to the autonomous vehicle V and defining the object O as a potential hazard in case said distance is smaller than a predetermined potential hazard threshold value.

Accordingly, for this, the autonomous vehicle V may, at a first step SB071a, receive information regarding a respective object recognized during environment recognition SB03, wherein these information may at least include the location of the respective object. For this, for instance, the autonomous vehicle V may access a predetermined storage space in which information regarding each recognized object is continually stored within the present system.

Thereinafter, the autonomous vehicle V may calculate the distance of the autonomous vehicle V to the object O by equally accessing its own positional information (SB072a) and subsequently determining, whether the calculated distance is smaller than a predetermined potential hazard threshold value (SB073a). Accordingly, in case said distance is indeed smaller, the autonomous vehicle V may further assign and register the object as a potential hazard and follow the steps of SB06 shown in Fig. 4 (SB074a).

Further, the same method may be applied in order to detect factual hazards within the system, particularly by using an additional factual hazard threshold value smaller than that of the potential hazard value and determining a factual hazard in case the distance is recognized to be smaller than that of the factual hazard threshold value (while, in this case, the determination of a potential hazard would then require a distance smaller than the potential hazard threshold value but larger than the factual hazard threshold value).

On that account, the right side of Fig. 5a may illustrate a given example in which each of the hazard levels may be present after conducting the hazard determination mechanism of Fig. 5a. Herein, the factual hazard threshold value may be illustrated by the lines 502 while the potential hazard threshold value may be defined by the lines 503. As a consequence, an object 03 would be considered as a factual hazard, the object 02 would be considered as a potential hazard and the object O1 would be considered as no hazard at all.

In addition, Fig. 5b shows another embodiment of the hazard detection step of SB07 in which, instead of the sole distance between the vehicle V and the object O, the position and velocity of the respective object are received as parameters (SB071b) and the hazard level of the given object O is determined by anticipating the distance of the object O to the vehicle V at a predetermined time in the future. Specifically, in this case, the autonomous vehicle V may calculate, based on the received position and velocity information, the trajectory or, in this case, the x- and y-related components of the two-dimensional trajectory of the respective object O (SB072b) and determine, in line with the detection mechanism above, if the distance of the vehicle V to the trajectory at a given point in time may be smaller than a predetermined threshold value, such as the potential hazard threshold value and the factual hazard threshold value mentioned above (SB073b, SB074b). In this way, an even more precise evaluation of the hazard level of an object O may be enabled.

Herein, on the right side of Fig. 5b, again an additional illustration of the determination mechanism of Fig. 5b is shown, wherein a first object 04 may show a first trajectory VE4 always providing a sufficient distance to the vehicle V while a second trajectory VE5 of a second object 05 may show an insufficient distance at some point. Accordingly, 05 may be determined as a potential hazard while 04 may be considered as no hazard.

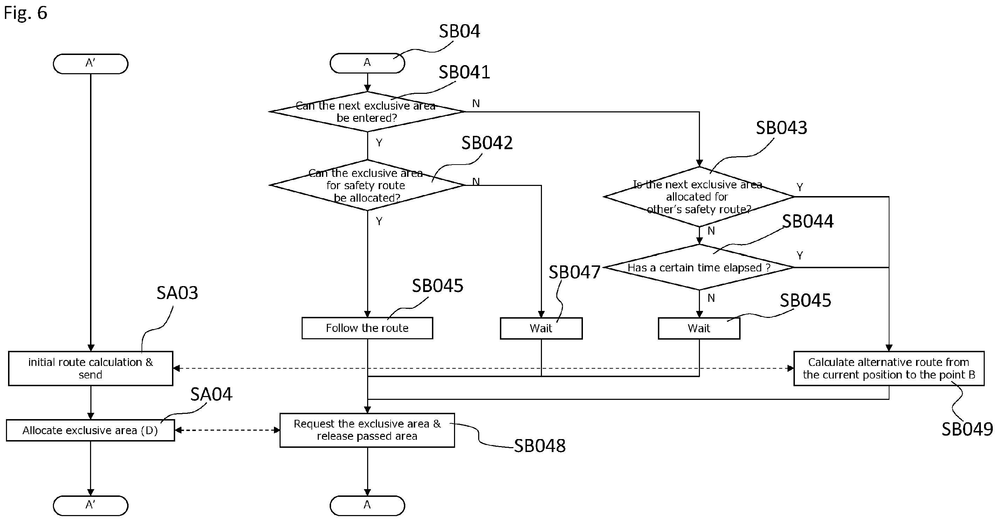

Fig. 6 shows further a more detailed description of the continuous adapting and moving mechanism conducted by the autonomous vehicle V during moving as described by step SB04 or, respectively, SB08 of Fig. 4.

Herein, the autonomous vehicle V shown in this embodiment may be particularly equipped with a dynamic moving mechanism requiring the presence of an appropriate exclusive safety area whenever a next move is to be conducted. That is, the moving mechanism shown in Fig. 6 is specifically defined in such way that the autonomous vehicle V may only move in a direction in which an exclusive safety area is already present, while, additionally, further exclusive safety areas may be consecutively allocated and assigned to the autonomous vehicle V, if necessary, so as to allow for the continuous safety of the vehicle.

Accordingly, based on the above-mentioned embodiment, the movement mechanism SB04/SB08 of the autonomous vehicle V may start by the request to proceed further on the initial route assigned to the autonomous vehicle V.

For this, the autonomous vehicle V may, in a first step SB081, detect if the next moving step to be conducted in order to follow the initial route is already secured by the assigned exclusive safety area, that is, whether with the next moving step still an area defined by the currently assigned exclusive safety area is entered or not.

In case it is determined that the next moving step is still secure by the currently assigned exclusive safety area, the autonomous vehicle V may further check whether with the next moving step also a new preferred exclusive safety area can be safely allocated/assigned to the autonomous vehicle V (SB042) so as to allow for a next moving step after this one.

In case both of the above-mentioned criteria are currently fulfilled for the autonomous vehicle V, the autonomous vehicle V may take the next appropriate moving step instructed by the initial route and further follow the initial route under step SB045. In addition, an additional exclusive safety area allocation process may be conducted under step SB088 by requesting and retrieving an updated exclusive safety area from the exclusive area manager 304 of the external control centre 300 so as to provide a sufficient basis for the next moving step of the autonomous vehicle V.

In contrast, in case the next moving step cannot be entered because no exclusive safety area is currently assigned to the autonomous vehicle V by which the next moving step would be secured (that is, in case the next moving step would enter an area not included in the exclusive safety area currently assigned to the autonomous vehicle V), the autonomous vehicle V may check whether the exclusive safety area required to proceed further is currently allocated/assigned to another vehicle's current exclusive candidate safety area (SB083).

In case this does not hold true (that is, the required area is rather currently used for another vehicles present exclusive safety area instead of the candidate safety area), the autonomous vehicle may rather wait for a predetermined amount of time (SB084/SB085) and then again try to request the required area.

Instead, in case the required area is found to be part of an exclusive candidate safety area of another vehicle, the autonomous vehicle V may rather send a request to the route planner 302 of the external control centre 300 to receive an alternative route to reach the predestined location (SB089) and, after receiving the alternative route, proceed through the alternative route by equally requesting consecutive external safety area allocations from the exclusive area manager 304.

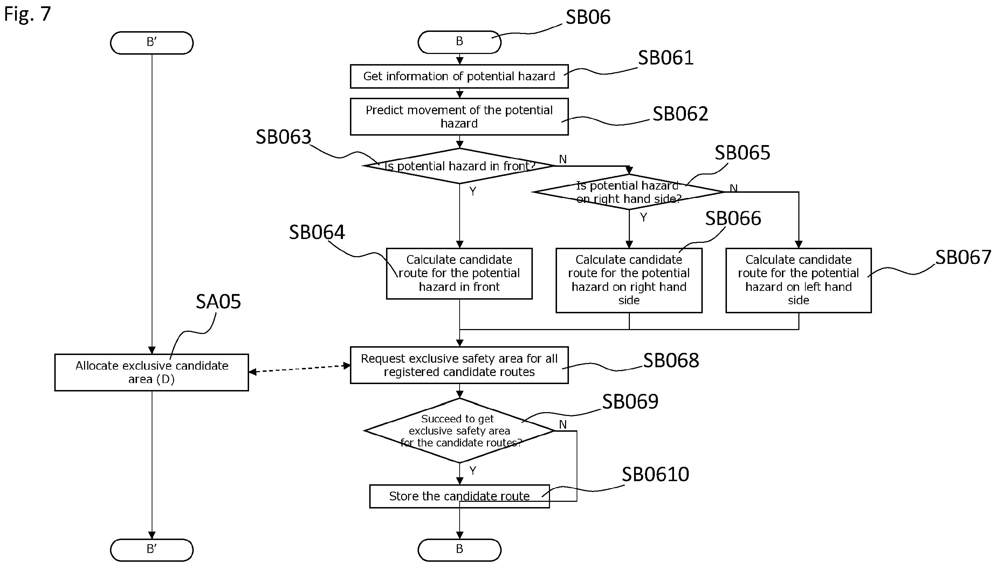

Fig. 7 further shows a first preferred embodiment for calculating candidate routes such as included by the step SB06 shown in Fig. 4.

Herein, specifically, the candidate route calculation mechanism delineated in Fig. 7 is based on the receipt of spatial information of the object associated with a corresponding potential hazard as well as the usage of moving prediction algorithms.

For this, in a first step SB061, the autonomous vehicle may receive information, specifically spatial information such as the location, speed and/or an already analyzed trajectory of the corresponding object.

Thereinafter, the autonomous vehicle V may predict the movement of the object by analyzing the retrieved information and anticipate one or more positions of the object in the future (SB062).

Subsequently, the autonomous vehicle V may initiate the calculation of appropriate candidate routes by initially detecting the position of the object at a prospective timepoint. Specifically, the autonomous vehicle may initially check if the object may, at the prospective time point, located at the front side of the vehicle V (step SB063), at the right hand side of the vehicle V (SB065) or alternatively on the left hand side and calculate appropriate one or more candidate routes accordingly (steps SB064, SB066, SB067).

Moreover, after sufficiently calculating the one or more candidate routes, the autonomous vehicle V may further require exclusive candidate safety areas respectively associated to each of the calculated candidate routes. For this, the autonomous vehicle V may in this embodiment request the corresponding exclusive candidate safety areas from the exclusive area manager 304 of the external control centre 300 (step SB068), particularly by sending a candidate area calculation request to the exclusive area manager 304. The exclusive area manager 304 in turn calculates the respective exclusive candidate safety areas, if possible, store, assign and allocate them to the associated candidate routes (SA05) and lastly send them back to the autonomous vehicle V. Further, in a possible embodiment, the exclusive area manager 304 may at this point equally conduct an additional security selection process by which even successfully calculated exclusive candidate safety areas may be subsequently omitted, that is, not send back to the autonomous vehicle V in case the calculated exclusive candidate safety areas are not fulfilling predefined requirements set by the system.

Subsequently, the autonomous vehicle V may inspect the exclusive candidate safety areas received from the exclusive safety areas (SB069) and thereinafter store such candidate routes which have been received an associated exclusive candidate safety area (SB0610). That is, only such calculated candidate routes are stored and can thereby be used by the autonomous vehicle V which contain at least one associated exclusive candidate safety area in the system, resulting in the effect that the exclusive candidate safety area calculation process conducted by the exclusive area manager 304 can be likewise seen as an efficient preselection process for each of the calculated candidate routes.

On that account, in a different embodiment, it may be equally possible that the calculation of the associated exclusive candidate safety areas may not be performed by the exclusive area manager 304 per se but instead by any of the other elements present in the autonomous vehicle management system. In these embodiments, the exclusive area manager 304 may yet preferably still be configured to conduct a preselection of the calculated candidate routes, preferentially by sending a storage permission request including information regarding the calculated candidate routes and, if applicable, already calculated exclusive candidate safety areas assigned to the candidate routes to the exclusive area manager 304 and storing the calculated candidate routes (and associated exclusive candidate safety areas) only in case the exclusive area manager 304, after conducting an additional selection mechanism (e.g. the security selection mechanism), retransmits a storage permission message to the autonomous vehicle V for each of the candidate routes.

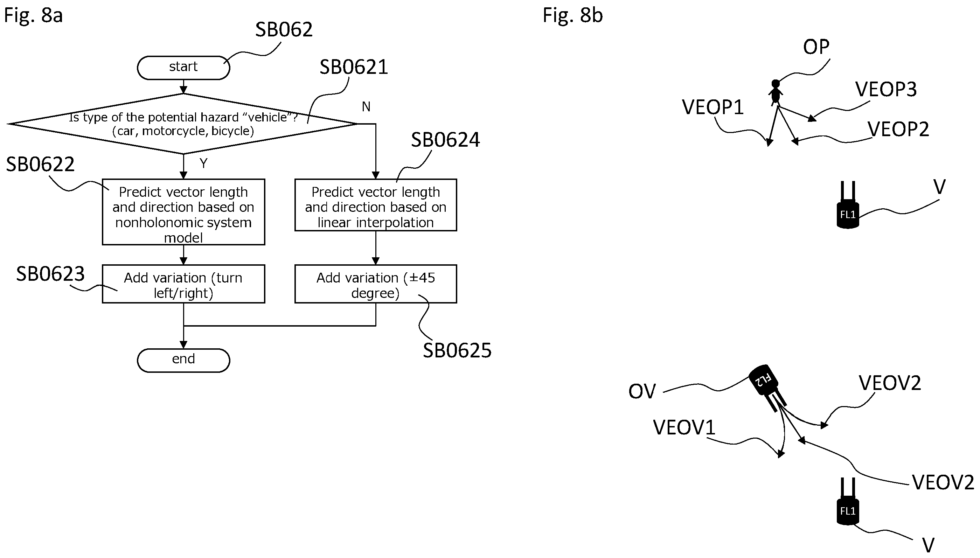

Fig. 8a further shows a more detailed illustration of an embodiment of the object movement prediction strategy utilized in the embodiment of Fig. 7 (step SB062) to anticipate the location of a potentially hazardous object for candidate route calculation.

Herein, the respective strategy may, in a first step (SB0621), initially include a type recognition of the respective object O. For this, for instance, the autonomous vehicle V may be configured to compare specific/detected characteristics of the recognized object O, such as its size, form and/or speed, with predetermined characteristics stored in the system's storage space and assigned to defined object types (e.g. a human-being, a car, a motorcycle, bicycle etc.) and thereby identify the respective type of the recognized object O.

Consecutively, depending on the outcome of the above-mentioned object type identification, different movement prediction strategies may be performed by the autonomous vehicle V.

For instance, in case the autonomous vehicle V is able to identify the object type of the corresponding object O as an object with wheel and steering (e.g. car, motorcycle, bicycle), the autonomous vehicle V may be further configured to predict the movement of the object by utilizing a nonholonomic system model, preferentially explicitly assigned to the object type of the respective object (SB0622). Based on this, the autonomous vehicle may for example predict the vector length and the direction of the trajectory which will be potentially taken by the object based on the respective model and received information and, subsequently, calculate the one or more candidate routes based on the so generated trajectory vector.

In addition, in the embodiment illustrated in Fig. 8a, the autonomous vehicle V does additionally output not only the predicted movement of the object O by means of anticipating a persistent movement behavior of the object O, but likewise outputs additional vectors defining variations of the object's movement (such as, e.g. a left or right turn at a predetermined amount of time, step SB0623). As a consequence, in this way the efficiency of the corresponding candidate routes can be further increased, particularly since for the subsequent calculation of candidate routes, each possible movement of the object O can be included.

In contrast, in case in step SB062, the autonomous vehicle V is able to identify the object type of the corresponding object O as a freely movable object (e.g. human), or may not be capable of identifying the object type of the corresponding object O, the movement prediction strategy of Fig. 8a may stipulate to calculate a predicted vector based on more common approaches, such as e.g. by using a linear interpolation model (SB0624), while also output not only one predicted vector but also several variations, e.g. vectors representing a 45 degree turn of the object in each direction from the originally anticipated movement vector (SB0625), for the subsequent candidate route calculation.

Further, Fig. 8b again shows illustratively the different movement prediction strategies delineated in accordance with Fig. 8a. Here, the top part of Fig. 8b illustrates a case, in which the object type of object OP could not be sufficiently identified by the autonomous vehicle V (e.g. since the object relates to a human hard to be identified). In this case, the movement prediction method may calculate the prediction vector VEOP2 based on a linear interpolation model and add the variations VEOP1 and VEOP3 for subsequently calculating appropriate candidate routes.

In contrast, the bottom part of Fig. 8b illustrates a case in which the object OV was sufficiently identified as a vehicle, specifically a forklift, by which the movement prediction strategy calculates the prediction vector VEOV2 and the variations VEOV1 and VEOV3 according to a nonholonomic system model specifically assigned to the identified object type.

Fig. 9a further shows an additional embodiment of the candidate route calculation mechanism conducted in step SB06 of Fig. 4.

Herein, specifically, the embodiment of Fig. 9a includes the mechanism of calculating, for each potential hazard detected in the prior hazard detection step SB05, at least two different candidate routes, wherein, at the same time, for calculating these candidate routes, the predictive information gained from the movement prediction mechanism of Fig. 8 are used for calculating both of the candidate routes.

On that account, as a first step SB06A1, an iteration loop is started in which each of the following process steps are iteratively conducted for each predicted movement vector priorly generated by the movement prediction mechanism.

Accordingly, in a second step SB06A2, a respective predicted movement vector is iteratively selected and thereinafter used, in the next step SB06A3, to calculate a first candidate route. Herein, the first candidate route may be specifically calculated in such way, e.g. by using a predetermined calculation algorithm, that a maximum distance of the autonomous vehicle V to the object O is kept at all times, resulting in a safety-prioritized candidate route.

Subsequently, after sufficiently calculation the first candidate route for the respective predicted movement vector, the first candidate route is registered, that is stored (SB06A4) and the calculation of the second candidate route (SB06A5) is initiated.

Herein, in contrast to the first candidate route, the second candidate route may be specifically calculated, e.g. based on a second predetermined calculation algorithm, so as keep always a certain distance of the autonomous vehicle V to the object O while, at the same time, allowing for a connection of the second candidate route to the initial route at some point (hence defining the second candidate route as a short route prioritizing transport efficiency).

Finally, after calculating the second candidate route, the latter is equally registered/stored by the autonomous vehicle V (SB06A7) and the preceding steps are reiterated for another predicted movement vector (or, respectively, the calculation ends at step SB068).

Fig. 9b further illustrates the characteristics of the respective first and second candidate routes calculated by the candidate calculation mechanism of Fig. 9a. Specifically, the top part of Fig. 9b shows the orientation of a first candidate route CR1 to be used by the autonomous vehicle V facing away from the predicted movement vector VEO of the object O, thus allow for a maximal distance to the object. Instead, in the bottom part of Fig. 9b, it is shown that the second candidate route CR2 stays rather close to the initial route of the vehicle V and even again connects to it after a certain amount of time, resulting in an efficient collision avoidance process.

Fig. 10a further shows an exemplary workflow of an embodiment of the exclusive area selection and allocation mechanism conducted by the exclusive area manager 304 and used in the present invention to calculate and select sufficient safety areas to be assigned to an associated initial or candidate path. Accordingly, the respective process steps may be used for both, the calculation of the exclusive safety area (SA04) assigned to an initial route of an autonomous vehicle V or an exclusive candidate safety area (SA05) assigned to a candidate route. At the same time, the same process may be also used or included into the security selection process of the exclusive area manager 304 mentioned above which is yet not explicitly illustrated herein.

On that account, in a first step SA041 of the exclusive safety area selection mechanism of Fig 10a, the exclusive area manager 304 may receive a requested exclusive safety area and/or exclusive candidate safety area previously calculated by the exclusive area manager 304, the autonomous vehicle V or any other element of the autonomous vehicle management system to be considered for allocation (that is, assignment to a given initial route or candidate route).

In the next step SA042, the exclusive area manager 304 may receive information regarding each currently stored safety area, that is, predominantly, the located area of each currently allocated or used exclusive safety area and exclusive candidate safety area within the system. For this, the exclusive area manager 304 may be specifically able to store said information in a self-created manner, e.g. by storing each of the information personally in a predetermined storage space, or may have at least be able to retrieve the information from a storage spaces the respective information are already stored upon. As a consequence, the exclusive area manager gains access to each area within the system currently assigned or allocated to an exclusive safety area or an exclusive candidate safety area, which may be equally conglomerated into a single exclusive safety area map.

Thereinafter, for testing the sufficiency of the respectively requested safety area, the exclusive area manager 304 may perform at least a test of whether the requested safety area or at least a part of the requested safety area is currently already used, that is, allocated within the system (SSA043). In order to do this, the exclusive area manager 304 may retrieve the area location defined by the requested safety area from the received safety area information and compare the respective area location with the areas currently allocated with an exclusive safety area or an exclusive candidate safety area within the system (SA044).

Subsequently, in case the exclusive area manager 304 identifies that the area location defined by the requested safety area is currently not allocated/used by any of the autonomous vehicles V, the exclusive area manager 304 may allocate the requested area to the respectively assigned initial route or candidate route (and therefore, the respective autonomous vehicle V associated to the route, step SA045) and further send back the approved and allocated safety area to the corresponding autonomous vehicle (SA047).

In addition, the exclusive area manager 304 additionally may update the information regarding the currently stored safety areas by likewise store the newly allocated safety area in the corresponding storage space (SA048) and finish the safety area selection afterwards.

In contrast, in case the requested safety area may be already stored/used by any of the corresponding autonomous vehicles V, the exclusive area manager 304 may not allocate and store the requested safety area, but instead send a failure message (or vice versa, does not send a storage approval message) to the respective autonomous vehicle V requesting the storage and/or allocation of the safety area (SA046), resulting in the effect that also the calculated initial or candidate route is normally omitted or updated (see again Fig. 4).

Further, Fig. 10b shows another embodiment of the above-mentioned safety area selection mechanism, wherein the difference between the mechanism of Fig. 10a and Fig. 10b is defined by the alternative process performed by the exclusive area manager 304 in case the location area of the requested safety area is identified as already being used by another exclusive safety area or exclusive candidate safety area within the system.

In this embodiment, opposed to not allocating and storing the respective requested safety area, the exclusive area manager 304 may instead further identify if the requested safety area belongs to an exclusive candidate safety area (SA046') and then still approve an allocation and storage of the requested safety area (SA0410' & SA048) in case the respectively stored safety area currently blocking the area required by the requested safety area is only assigned to an initial route of another autonomous vehicle V (SA047') and no other object or vehicle is currently present at the requested area (SA048'). In this way, the safety within the system may be further improved, particularly since by performing these additional steps the allocation of exclusive candidate safety areas and, thus, the generation and existence of candidate routes may be prioritized within the system. In addition, in order to compensate the allocation of the requested safety area, the exclusive area manager 304 may further delete the corresponding formerly stored safety area (SA049') and preferably reassign a new initial route and exclusive safety area to the respective autonomous vehicle V the deleted safety area was assigned with.

Fig. 11a shows yet another illustration of an embodiment of a cooperative system according to the present invention in which, for further demonstrating the mechanisms implemented in the respective autonomous vehicle management system, an autonomous vehicle V is shown at a given starting point A and being assigned with an initial route IR, requiring the autonomous vehicle V to move to the destined location B.

Additionally, to again illustrate a preferred movement behavior of the autonomous vehicle V according to the present invention and the significance of the exclusive safety areas assigned to a given autonomous vehicle V, Fig. 11b and Fig. 11c show a situation in which the autonomous vehicle V is, based on the assigned exclusive area SA, unable to move along the initial route IR. Specifically, in this case, it is found that an object O stepped into the assigned exclusive safety area SA of the vehicle V, forcing the autonomous vehicle V to instantly halt any movement (see again the movement mechanism depicted in Fig. 6).

Fig. 11d further shows a situation in which the respective autonomous vehicle V was allowed to move along the initial route to a certain extent, resulting in the effect that the location of the autonomous vehicle V is different from such of Fig. 11a to Fig. 11c while, at the same time, the exclusive safety area SA assigned to the autonomous vehicle V was adapted to the movement, particularly by iteratively allocating a new location area to the assigned exclusive safety area SA. In comparison, the same movement characteristics of the autonomous vehicle V illustrated in Fig. 11b and Fig. 11c do still apply even in later stages of the travel, thus forcing the autonomous vehicle V again to halt its movement as an object O once more stepped into the (newly) allocated exclusive safety area of the vehicle V in Fig. 11e.

Fig 11f and Fig. 11g in contrast show an exemplary illustration of the hazard detection mechanism used in the present invention. Since the two objects O1 and O2 shown in Fig. 11f and O3 and 04 shown in Fig. 11g are not stepping into the exclusive safety area SA of the vehicle V, the autonomous vehicle V may be freely move along the initial route IR. At the same time, since each of the objectives O1 to O4 may already come into close proximity to the autonomous vehicle V, the autonomous vehicle may start its hazard detection mechanism by initially recognizing the presence and, preferably, particular information regarding each object within the system. As a consequence, within the systems shown in Fig. 11f and Fig. 11g, the autonomous vehicle V may, for example, recognize an object at the left hand side (object O1) and an object at the right hand side (object O2) of the vehicle at the system of Fig. 11f and an object at the right hand side (object 03) and an object at the front (object O4) of the vehicle V at the system of Fig. 11g.

Fig. 12a, 12b and 12c further show different situations in which an autonomous vehicle V may have already used the hazard detection, candidate route and exclusive candidate safety area calculation mechanism implemented in the system, particularly so as to avoid a collision with a moving object O being priory detected as a potential hazard (Fig. 12a, 12b and 12c may differentiate only by the position and movement of the object O, by reference).

Herein, since in each of the situations the respective autonomous vehicle V was able to calculate a number of potential emergency routes, specifically, in this case, the first CR2 and the second candidate routes CR1 priory delineated in reference to Fig. 9a and 9b, and was likewise sufficient to allocate respective exclusive candidate safety areas CSA1 & CSA2 assigned to the first and second candidate routes, the autonomous vehicle V is provided with a number of efficient collision avoidance possibilities, particularly by selecting and moving along one or the respectively existent candidate routes, while, at the same time, the number and size of required safety area allocations can be each time reduced to a minimum.

Fig. 13 further shows an additional, second embodiment of the composition of the proposed autonomous vehicle management system according to the present invention. At it, the elements and mechanisms included in the embodiment may be the same as for the composition already described in reference to Fig. 3. In contrast, the only difference to the embodiment of Fig. 3 may be depicted by the position of the route planner 302' which, in this case, is positioned in the one or more autonomous vehicles V instead of the external control centre 300'. Accordingly, with this composition it may be possible to further increase the efficiency of the management system, predominantly since the route planner 302' and the route calculation feedback loop of each of the autonomous vehicles V can be herewith directly connected, thus resulting in a more stable and error-free signal transduction between each of the existing elements.

Fig. 14 shows yet another concept to be included in the proposed autonomous vehicle management system. Specifically, since specific cooperative system may require the autonomous vehicles V to not move along predetermined areas (e.g. in a street-based system including both moving areas for vehicles and walking areas for humans), another possible mechanism to be implemented into the initial route calculation and exclusive safety area calculation mechanism described above may be the provision of vehicle prohibited and vehicle priority areas. Herein, a given system may, even prior to the calculation of the initial routes, define particular areas within the system's environment which each of the one or more autonomous vehicles may access for moving (the vehicle priority areas, see e.g. PA1, PA2, PA3, PA4 of Fig. 14) and areas which the one or more autonomous vehicles are prohibited to move in (the vehicle prohibited areas, see e.g. VPA1, VPA2, VPA3 of Fig. 14).

In order to include these areas into the initial route calculations and, preferably, also into the candidate route calculations and calculations of associated safety areas, the elements of the proposed autonomous vehicle management system may be further configured to receive information regarding the location of each of the predetermined priority and prohibited areas within the system and adapt the calculation of the vehicle routes and safety areas in accordance with these predetermined areas, at least by prohibiting route and safety area calculations along a vehicle prohibited area (see e.g. the initial route IR2 being prohibited since it traverses a vehicle prohibited area, specifically the vehicle prohibited area VPA2, wherein the initial route IR1 is still to be used). In this way, specific local characteristics within an environment can be easily included into the mechanisms of the proposed invention while the efficiency and safety of the respective management system can be still easily maintained.

It is furthermore noted that examples of the present disclosure may take the form of an entirely hardware example, an entirely software example (including firmware, resident software, micro-code, etc.), or an example combining software and hardware aspects. Furthermore, examples of the present disclosure may take the form of a computer program product on a computer-readable medium having computer-executable program code embodied in the medium.

It should be noted that arrows may be used in drawings to represent communication, transfer, or other activity involving two or more entities. Double-ended arrows generally indicate that activity may occur in both directions (e.g., a command/request in one direction with a corresponding reply back in the other direction, or peer-to-peer communications initiated by either entity), although in some situations, activity may not necessarily occur in both directions.

Single-ended arrows generally may indicate activity exclusively or predominantly in one direction, although it should be noted that, in certain situations, such directional activity actually may involve activities in both directions (e.g., a message from a sender to a receiver and an acknowledgement back from the receiver to the sender, or establishment of a connection prior to a transfer and termination of the connection following the transfer). Thus, the type of arrow used in a particular drawing to represent a particular activity is exemplary and should not be seen as limiting.

Aspects/examples/embodiments are described hereinabove with reference to flowchart illustrations and/or block diagrams of methods and apparatuses and the like. It will be understood that each block of the flowchart illustrations and/or block diagrams, and/or combinations of blocks in the flowchart illustrations and/or block diagrams can be implemented by computer-executable program code.

Any computer-executable program code may be provided to a processor of a general purpose computer, special purpose computer, or other programmable data processing apparatus to produce a particular machine, such that the program code, which executes via the processor of the computer or other programmable data processing apparatus, create means for implementing the functions/acts/outputs specified in the flowchart, block diagram block or blocks, figures, and/or written description.

These computer-executable program code may also be stored in a computer-readable memory that can direct a computer or other programmable data processing apparatus to function in a particular manner, such that the program code stored in the computer readable memory produce an article of manufacture including instruction means which implement the function/act/output specified in the flowchart, block diagram block(s), figures, and/or written description.

The computer-executable program code may also be loaded onto a computer or other programmable data processing apparatus to cause a series of operational steps to be performed on the computer or other programmable apparatus to produce a computer-implemented process such that the program code which executes on the computer or other programmable apparatus provides steps for implementing the functions/acts/outputs specified in the flowchart, block diagram block(s), figures, and/or written description. Alternatively, computer program implemented steps or acts may be combined with operator or human implemented steps or acts in order to carry out an embodiment.

Communication networks generally may include public and/or private networks; may include local-area, wide-area, metropolitan-area, storage, and/or other types of networks; and may employ communication technologies including, but in no way limited to, analogue technologies, digital technologies, optical technologies, wireless technologies (e.g., Bluetooth), networking technologies, and internetworking technologies.

It should also be noted that devices may use communication protocols and messages (e.g., messages created, transmitted, received, stored, and/or processed by the device), and such messages may be conveyed by a communication network or medium.

Unless the context requires otherwise, references to specific communication protocols are exemplary, and it should be understood that alternative embodiments may, as appropriate, employ variations of such communication protocols (e.g., modifications or extensions of the protocol that may be made from time-to-time) or other protocols either known or developed in the future.

Often times, logic elements may be added, modified, omitted, performed in a different order, or implemented using different logic constructs (e.g., logic gates, looping primitives, conditional logic, and other logic constructs) without changing the overall results.

The present disclosure may be embodied in many different forms, including, but in no way limited to, computer program logic for use with a processor (e.g., a microprocessor, microcontroller, digital signal processor, or general purpose computer), programmable logic for use with a programmable logic device (e.g., a Field Programmable Gate Array (FPGA) or other PLD), discrete components, integrated circuitry (e.g., an Application Specific Integrated Circuit (ASIC)), or any other means including any combination thereof Computer program logic implementing some or all of the described functionality is typically implemented as a set of computer program instructions that is converted into a computer executable form, stored as such in a computer readable medium, and executed by a microprocessor under the control of an operating system. Hardware-based logic implementing some or all of the described functionality may be implemented using one or more appropriately configured FPGAs.

Computer program logic implementing all or part of the functionality previously described herein may be embodied in various forms, including, but in no way limited to, a source code form, a computer executable form, and various intermediate forms (e.g., forms generated by an assembler, compiler, linker, or locator).

Source code may include a series of computer program instructions implemented in any of various programming languages (e.g., an object code, an assembly language, or a high-level language such as Fortran, C, C++, JAVA, Python, or HTML) for use with various operating systems or operating environments. The source code may define and use various data structures and communication messages. The source code may be in a computer executable form (e.g., via an interpreter), or the source code maybe converted (e.g., via a translator, assembler, or compiler) into a computer executable form.

Computer-executable program code for carrying out operations of embodiments of the present disclosure may be written in an object oriented, scripted or unscripted programming language such as Java, Perl, Smalltalk, C++, or the like. However, the computer program code for carrying out operations of embodiments may also be written in conventional procedural programming languages, such as the "C" programming language or similar programming languages.

Computer program logic implementing all or part of the functionality previously described herein may be executed at different times on a single processor (e.g., concurrently) or may be executed at the same or different times on multiple processors and may run under a single operating system process/thread or under different operating system processes/threads.

Thus, the term "computer process" may refer generally to the execution of a set of computer program instructions regardless of whether different computer processes are executed on the same or different processors and regardless of whether different computer processes run under the same operating system process/thread or different operating system processes/threads.

The computer program may be fixed in any form (e.g., source code form, computer executable form, or an intermediate form) either permanently or transitorily in a tangible storage medium, such as a semiconductor memory device (e.g., a RAM, ROM, PROM, EEPROM, or Flash-Programmable RAM), a magnetic memory device (e.g., a diskette or fixed disk), an optical memory device (e.g., a CD-ROM), a PC card (e.g., PCMCIA card), or other memory device.

The computer program may be fixed in any form in a signal that is transmittable to a computer using any of various communication technologies, including, but in no way limited to, analog technologies, digital technologies, optical technologies, wireless technologies (e.g., Bluetooth), networking technologies, and internetworking technologies.

The computer program may be distributed in any form as a removable storage medium with accompanying printed or electronic documentation (e.g., shrink wrapped software), preloaded with a computer system (e.g., on system ROM or fixed disk), or distributed from a server or electronic bulletin board over the communication system (e.g., the Internet or World Wide Web).

Hardware logic (including programmable logic for use with a programmable logic device) implementing all or part of the functionality previously described herein may be designed using traditional manual methods, or may be designed, captured, simulated, or documented electronically using various tools, such as Computer Aided Design (CAD), a hardware description language (e.g., VHDL or AHDL), or a PLD programming language (e.g., PALASM, ABEL, or CUPL).

Any suitable computer readable medium may be utilized. The computer readable medium may be, for example but not limited to, an electronic, magnetic, optical, electromagnetic, infrared, or semiconductor system, apparatus, device, or medium.

More specific examples of the computer readable medium include, but are not limited to, an electrical connection having one or more wires or other tangible storage medium such as a portable computer diskette, a hard disk, a random access memory (RAM), a read-only memory (ROM), an erasable programmable read-only memory (EPROM or Flash memory), a compact disc read-only memory (CD-ROM), or other optical or magnetic storage device.

Programmable logic may be fixed either permanently or transitorily in a tangible storage medium, such as a semiconductor memory device (e.g., a RAM, ROM, PROM, EEPROM, or Flash-Programmable RAM), a magnetic memory device (e.g., a diskette or fixed disk), an optical memory device (e.g., a CD-ROM), or other memory device.

The programmable logic may be fixed in a signal that is transmittable to a computer using any of various communication technologies, including, but in no way limited to, analogue technologies, digital technologies, optical technologies, wireless technologies (e.g., Bluetooth), networking technologies, and internetworking technologies.

The programmable logic may be distributed as a removable storage medium with accompanying printed or electronic documentation (e.g., shrink wrapped software), preloaded with a computer system (e.g., on system ROM or fixed disk), or distributed from a server or electronic bulletin board over the communication system (e.g., the Internet or World Wide Web). Of course, some aspects may be implemented as a combination of both software (e.g., a computer program product) and hardware. Still other embodiments of the may be implemented as entirely hardware, or entirely software.

## Claims

1. An autonomous vehicle management system for dynamically managing the driving routine of a plurality of autonomous vehicles (V), the autonomous vehicle management system comprising:
- an external control centre (300; 300') comprising at least an exclusive area manager (304; 304');
- one or more autonomous vehicles (V) being communicatively connected to the external control centre (300; 300'); and
- a route planner (302; 302') being included in the external control centre (300; 300') or the one or more autonomous vehicles (V);
wherein the route planner (302; 302') is configured to calculate and assign an initial route (IR) to the one or more autonomous vehicles (V) and the exclusive area manager (304; 304') is configured to calculate and store an exclusive safety area (SA) for the initial route (IR); and
the one or more autonomous vehicles (V) are configured to autonomously move from a predetermined start point to a destination point based on the assigned initial route (IR);
the autonomous vehicle management system being further **characterized in that**
the external control centre (300; 300') and/or the one or more autonomous vehicles (V) are further configured to detect changes of an environment around the initial route (IR) and determine at least one of a potential hazard or a factual hazard for the one or more autonomous vehicles (V) moving along the assigned initial route (IR);
wherein, in case a change of the environment around the assigned initial route has been determined as a potential hazard, the external control centre (300; 300') and/or the one or more autonomous vehicle (V) are further configured to perform a candidate route generation process comprising at least the steps of
- calculating at least one candidate route (CR) being different from the assigned initial route (IR) and an exclusive candidate safety area (CSA) associated to the at least one candidate route for a first autonomous vehicle of the one or more autonomous vehicle (V); and
- storing the at least one set of the candidate route (CR) and the exclusive candidate safety area (CSA) associated with the candidate route (CR); and
in case a change of the environment around the initial route has been determined as a factual hazard, the first autonomous vehicle is configured to perform a route switching process comprising at least the steps of
- selecting one of sets of the stored candidate route (CR) and associated exclusive candidate safety area;
- setting the selected candidate route (CR) as a new initial route and setting the exclusive candidate safety area (CSA) associated with the selected candidate route as the new exclusive safety area; and
- continue moving along the new initial route,
wherein
the external control centre (300; 300') and/or the one or more autonomous vehicles (V) are configured to determine at least one of the potential hazard or the factual hazard based on a hazard determination process comprising the steps of
receiving object information regarding an object (O) to be identified as a potential hazard or a factual hazard, wherein the object information includes at least a position or the position and a velocity of the object (O); and
determining whether the object (O) is a potential hazard or a factual hazard for one of the one or more autonomous vehicles (V) by comparing the received object information with predetermined thresholds defined by each of the one or more autonomous vehicles (V).

2. The autonomous vehicle management system according to claim 1, wherein
the candidate route generation process performed by the external control centre (300; 300') and/or the one or more autonomous vehicles (V) further comprising
allocating the stored candidate safety area by adding the stored exclusive candidate safety area (CSA) to the area assigned to the exclusive safety area (SA) of the first autonomous vehicle.

3. The autonomous vehicle management system according at least to claim 1 or 2, wherein
the candidate route generation process performed by the external control centre (300; 300') and/or the one or more autonomous vehicles (V) further comprising
sending, to the exclusive area manager (304; 304'), a request for each calculated candidate route (CR), to store the respective calculated candidate route (CR) and calculated exclusive candidate safety area (CSA); and
storing the at least one of the sets of candidate route (CR) and exclusive candidate safety area (CSA) only in case a storage permission message is received from the exclusive area manager (304; 304').

4. The autonomous vehicle management system according to claim 3, wherein
the exclusive area manager (304; 304') of the external control centre (300; 300') is configured to store information regarding each exclusive safety area (SA) being currently stored by the external centre (300; 300') and each exclusive candidate safety area (CSA) being currently stored by the external control centre (300; 300') and/or the one or more autonomous vehicles (V); and wherein
the exclusive area manager (304; 304') is configured to transmit the storage permission message to the first autonomous vehicle by accessing the stored information and transmitting the storage permission message in case the requested exclusive candidate safety area (CSA) does at least not overlap with any of the stored exclusive safety areas (SA) and stored exclusive candidate safety areas (CSA).

5. The autonomous vehicle management system according to claim 1, wherein
the predetermined thresholds are defined at least by a distance of the object (O) to each of the one or more autonomous vehicles (V); and wherein
the object (O) is defined as a potential hazard in case the distance of the object (O) to at least one of the one or more autonomous vehicles (V) is smaller than a predetermined potential hazard value and larger than a predetermined factual hazard value; and
the object (O) is defined as a factual hazard in case the distance of the object (O) to at least one of the one or more autonomous vehicles (V) is smaller than a predetermined factual hazard value.

6. The autonomous vehicle management system according to at least one of the previous claims, wherein
the at least one candidate route (CR) calculated by the first autonomous vehicle is calculated to avoid the potential hazard caused by an object (O) to the first autonomous vehicle; and wherein
the external control centre (300; 300') and/or the one or more autonomous vehicles (V) are configured to calculate the at least one candidate route (CR) based on the relative position of the object (O) to the first autonomous vehicle.

7. The autonomous vehicle management system according to at least one of the previous claims, wherein
the at least one candidate route (CR) calculated by the external control centre (300; 300') and/or the one or more autonomous vehicles (V) is calculated to avoid the potential hazard caused by an object (O) to the first autonomous vehicle; and wherein
the first autonomous vehicle is configured to calculate the at least one candidate route (CR) based on a prediction of the movement of the object (O).

8. The autonomous vehicle management system according to at least one of the previous claims, wherein
the step of calculating, by the external control centre (300; 300') and/or the one or more autonomous vehicles (V), the at least one candidate route (CR) comprises at least the calculation of a first candidate route (CR1) and a second candidate route (CR2); wherein
the first candidate route (CR1) is defined to keep a maximum distance of the first autonomous vehicle to the potential hazard; and
the second candidate route (CR2) is defined to keep a predefined distance of the first autonomous vehicle to the potential hazard and ultimately realign with the initial route.

9. The autonomous vehicle management system according to at least one of the previous claims, wherein
the external control centre (300; 300') and/or the one or more autonomous vehicles (V) are configured to manage the stored candidate routes (CR); and
wherein the external control centre (300; 300') and/or the one or more autonomous vehicles (V) are configured to delete and/or update a stored candidate route (CR) and the associated exclusive candidate safety area (CSA) based at least on a detected change of the environment or after a predefined time has been elapsed after storage.

10. The autonomous vehicle management system according to claim 3, wherein
the exclusive area manager (304; 304') of the external control centre is configured to store information regarding each stored exclusive safety area (SA) and each stored exclusive candidate safety area (CSA); wherein
in case the requested exclusive candidate safety area (CSA) does only overlap with a stored initial route (IR), the exclusive area manager (304; 304') is configured to transmit the storage permission message to the first autonomous vehicle; and
the route planner (302; 302') is configured to delete the stored initial route (IR) overlapping with the exclusive candidate safety area (CSA) and reassign a new initial route to the one or more autonomous vehicles (V) the deleted initial route was assigned to.

11. The autonomous management system according to claim 3, wherein
in case after sending, by the external control centre (300; 300') and/or the one or more autonomous vehicles (V) to the exclusive area manager (304; 304'), a request for a calculated candidate route (CR) to store the respective calculated candidate route (CR) and exclusive candidate safety area (CSA), the exclusive area manager (304; 304') is not sending a storage permission message to the first autonomous vehicle, the route planner (302; 302') is configured to calculate an alternative candidate route and the exclusive area manager (304; 304') is configured to calculate an alternative candidate safety area associated to the alternative candidate route; wherein
the exclusive area manager (304; 304') is configured to send the alternative candidate route and the alternative candidate safety area to the first autonomous vehicle; and
the first autonomous vehicle is configured to store the alternative candidate route and the alternative candidate safety area as a candidate route (CR) and the candidate safety area (CSA) associated with the candidate route (CR).

12. The autonomous vehicle management system according to at least one of the preceding claims, wherein
the external control centre (300; 300') and/or the one or more autonomous vehicles (V)are configured to store map data comprising two-dimensional information regarding the moving area in which the one or more autonomous vehicles (V) are moving; wherein
the two-dimensional information include at least information about one or more vehicles priority areas (PA) defining the movement area in which the one or more autonomous vehicles are preferred to move and one or more vehicle prohibited areas (VPA) defining the movement area in which the one or more autonomous vehicles are prohibited to move; and wherein
the route planner (302; 302') is configured to calculate and assign an initial route (IR) by accessing the map data and utilizing only locations defined by the vehicle priority area (PA) for route calculation; and
the exclusive area manager (304; 304') of the external control centre (300; 300') is configured to calculate and store the exclusive safety area (SA) of the corresponding initial route (IR) by accessing the map data und utilizing only locations defined by the vehicle priority area (PA) for exclusive safety area calculation.

13. The autonomous vehicle management system according to claim 12, wherein
the exclusive area manager (304; 304') is configured to transmit the storage transmission message to the external control centre (300; 300') and/or the one or more autonomous vehicles (V) by comparing the requested exclusive candidate safety area (CSA) with the map data and transmitting the storage transmission message in case the requested exclusive candidate safety area (CSA) overlaps with an area defined by the vehicle priority area (PA) and/or the vehicle prohibition area (VPA).

14. A method for dynamically managing a driving routine of a plurality of autonomous vehicles (V) by an autonomous vehicle management system comprising a an external control centre (300; 300'), one or more autonomous vehicles (V) being communicatively connected to the external control centre (300; 300') and a route planner (302; 302'), the external control centre (300; 300') further comprising at least an exclusive area manager (304; 304') and the route planner (302; 302') is included in the external control centre (300; 300') or the one or more vehicles (V), the method comprising at least the steps of:
- calculating and assigning, by the route planner (302; 302'), an initial route (IR) to the one or more autonomous vehicles (V) and calculating and storing, by the exclusive area manager (302; 204'), an exclusive safety area (SA) for the initial route (IR);
- autonomously moving, by the one or more autonomous vehicles (V), from a predetermined start point to a destination point based on the assigned initial route (IR);
the method being further **characterized by**:
- detecting, by the external control centre (300; 300') and/or the one or more autonomous vehicles (V), changes of an environment around the initial route (IR) and determining at least one of a potential hazard or a factual hazard for the one or more autonomous vehicles (V) moving along the assigned initial route (IR);
- in case a change of the environment around the assigned initial route (IR) has been determined as a potential hazard, calculating, by the external control centre (300; 300') and/or the one or more autonomous vehicles (V), at least one candidate route (CR) being different from the assigned initial route (IR) and an exclusive candidate safety area (CSA) associated to the at least one candidate route (CR) for a first autonomous vehicle of the one or more autonomous vehicle (V) and storing the at least one candidate route (CR) and exclusive candidate safety area (CSA); and
- in case a change of the environment around the initial route has been determined as a factual hazard, selecting, by the first autonomous vehicle, one of the stored candidate routes (CR);
- setting, by the first autonomous vehicle, the selected candidate route (CR) as a new initial route and setting the selected exclusive candidate safety area (CSA) associated with the selected candidate route (CR) as the new exclusive safety area and;
- continue moving, by the first autonomous vehicle, along the new initial route,
wherein the external control centre (300; 300') and/or the one or more autonomous vehicles (V) are configured to determine at least one of the potential hazard or the factual hazard based on a hazard determination process comprising the steps of
receiving object information regarding an object (O) to be identified as a potential hazard or a factual hazard, wherein the object information includes at least a position or the position and a velocity of the object (O); and
determining whether the object (O) is a potential hazard or a factual hazard for one of the one or more autonomous vehicles (V) by comparing the received object information with predetermined thresholds defined by each of the one or more autonomous vehicles (V).
- .

## Patentansprüche

1. Managementsystem für autonome Fahrzeuge zum dynamischen Managen der Fahrroutine von mehreren autonomen Fahrzeugen (V), wobei das Managementsystem für autonome Fahrzeuge Folgendes umfasst:
- ein externes Steuerzentrum (300; 300'), das mindestens einen Exklusivbereichsmanager (304; 304') umfasst;
- ein oder mehrere autonome Fahrzeuge (V), die mit dem externen Steuerzentrum (300; 300') kommunikationstechnisch verbunden sind; und
- einen Routenplaner (302; 302'), der in dem externen Steuerzentrum (300; 300') oder dem einen oder den mehreren autonomen Fahrzeugen (V) enthalten ist;
wobei der Routenplaner (302; 302') konfiguriert ist, eine anfängliche Route (IR) zu dem einen oder den mehreren autonomen Fahrzeugen (V) zu berechnen und zuzuweisen, und der Exklusivbereichsmanager (304; 304') konfiguriert ist, einen exklusiven Sicherheitsbereich (SA) für die anfängliche Route (IR) zu berechnen und zu speichern;
das eine oder die mehreren autonomen Fahrzeuge (V) konfiguriert sind, sich auf der Grundlage der zugewiesenen anfänglichen Route (IR) autonom von einem vorgegebenen Startpunkt zu einem Zielpunkt zu bewegen; und
das Managementsystem für autonome Fahrzeuge ferner **dadurch gekennzeichnet ist, dass**
das externe Steuerzentrum (300; 300') und/oder das eine oder die mehreren autonomen Fahrzeuge (V) ferner konfiguriert sind, Änderungen einer Umgebung um die anfängliche Route (IR) zu detektieren und mindestens eine einer möglichen Gefahr oder einer tatsächlichen Gefahr für das eine oder die mehreren autonomen Fahrzeuge (V), die sich auf der zugewiesenen anfänglichen Route (IR) bewegen, zu bestimmen;
wobei dann, wenn eine Änderung der Umgebung um die zugewiesene anfängliche Route als eine mögliche Gefahr bestimmt wurde, das externe Steuerzentrum (300; 300') und/oder das eine oder die mehreren autonomen Fahrzeuge (V) ferner konfiguriert sind, einen Kandidatenroutenerzeugungsprozess durchzuführen, der mindestens die folgenden Schritte umfasst:
- Berechnen mindestens einer Kandidatenroute (CR), die von der zugewiesenen anfänglichen Route (IR) verschieden ist, und eines exklusiven Kandidatensicherheitsbereichs (CSA), der der mindestens einen Kandidatenroute zugeordnet ist, für ein erstes autonomes Fahrzeug des einen oder der mehreren autonomen Fahrzeuge (V) und
- Speichern des mindestens einen Satzes der Kandidatenroute (CR) und des exklusiven Kandidatensicherheitsbereichs (CSA), der der Kandidatenroute (CR) zugeordnet ist; und
dann, wenn eine Änderung der Umgebung um die anfängliche Route als eine tatsächliche Gefahr bestimmt wurde, das erste autonome Fahrzeug konfiguriert ist, einen Routenwechselprozess durchzuführen, der mindestens die folgenden Schritte umfasst:
- Wählen eines von Sätzen der gespeicherten Kandidatenroute (CR) und des zugeordneten exklusiven Kandidatensicherheitsbereichs;
- Setzen der gewählten Kandidatenroute (CR) als eine neue anfängliche Route und Setzen des exklusiven Kandidatensicherheitsbereichs (CSA), der der gewählten Kandidatenroute zugeordnet ist, als den neuen exklusiven Sicherheitsbereich; und
- Fortsetzen des Bewegens auf der neuen anfänglichen Route, wobei
das externe Steuerzentrum (300; 300') und/oder das eine oder die mehreren autonomen Fahrzeuge (V) konfiguriert sind, mindestens eine der möglichen Gefahr oder der tatsächlichen Gefahr auf der Grundlage eines Gefahrenbestimmungsprozesses zu bestimmen, der die folgenden Schritte umfasst:
Empfangen von Objektinformationen hinsichtlich eines Objekts (O), das identifiziert werden soll, als eine mögliche Gefahr oder eine tatsächliche Gefahr, wobei die Objektinformationen mindestens eine Position oder die Position und eine Geschwindigkeit des Objekts (O) enthalten; und
Bestimmen, ob das Objekt (O) eine mögliche Gefahr oder eine tatsächliche Gefahr für eines des einen oder der mehreren autonomen Fahrzeuge (V) ist, durch Vergleichen der empfangenen Objektinformationen mit vorgegebenen Schwellenwerten, die durch jedes des einen oder der mehreren autonomen Fahrzeuge (V) definiert sind.

2. Managementsystem für autonome Fahrzeuge nach Anspruch 1, wobei
der Kandidatenroutenerzeugungsprozess, der durch das externe Steuerzentrum (300; 300') und/oder das eine oder die mehreren autonomen Fahrzeuge (V) durchgeführt wird, ferner Folgendes umfasst:
Zuweisen des gespeicherten Kandidatensicherheitsbereichs durch Hinzufügen des gespeicherten exklusiven Kandidatensicherheitsbereichs (CSA) zu dem Bereich, der dem exklusiven Sicherheitsbereich (SA) des ersten autonomen Fahrzeugs zugewiesen ist.

3. Managementsystem für autonome Fahrzeuge nach Anspruch 1 und/oder Anspruch 2, wobei
der Kandidatenroutenerzeugungsprozess, der durch das externe Steuerzentrum (300; 300') und/oder das eine oder die mehreren autonomen Fahrzeuge (V) durchgeführt wird, ferner Folgendes umfasst:
Senden zum Exklusivbereichsmanager (304; 304') einer Anforderung jeder berechneten Kandidatenroute (CR), um die jeweilige berechnete Kandidatenroute (CR) und den jeweiligen berechneten exklusiven Kandidatensicherheitsbereich (CSA) zu speichern; und
Speichern des mindestens einen der Sätze einer Kandidatenroute (CR) und eines exklusiven Kandidatensicherheitsbereichs (CSA) lediglich dann, wenn eine Speichergenehmigungsnachricht vom Exklusivbereichsmanager (304; 304') empfangen wird.

4. Managementsystem für autonome Fahrzeuge nach Anspruch 3, wobei
der Exklusivbereichsmanager (304; 304') des externen Steuerzentrums (300; 300') konfiguriert ist, Informationen hinsichtlich jedes exklusiven Sicherheitsbereichs (SA), der durch das externe Zentrum (300; 300') gegenwärtig gespeichert ist, und jedes exklusiven Kandidatensicherheitsbereichs (CSA), der durch das externe Steuerzentrum (300; 300') und/oder das eine oder die mehreren autonomen Fahrzeuge (V) gegenwärtig gespeichert ist, zu speichern; und
der Exklusivbereichsmanager (304; 304') konfiguriert ist, die Speichergenehmigungsnachricht durch Zugreifen auf die gespeicherten Informationen und Übertragen der Speichergenehmigungsnachricht, falls der angeforderte exklusive Kandidatensicherheitsbereich (CSA) nicht mindestens mit einem der gespeicherten exklusiven Sicherheitsbereiche (SA) und der gespeicherten exklusiven Kandidatensicherheitsbereiche (CSA) überlappt, zum ersten autonomen Fahrzeug zu übertragen.

5. Managementsystem für autonome Fahrzeuge nach Anspruch 1, wobei
die vorgegebenen Schwellenwerte mindestens durch eine Entfernung des Objekts (O) zu jedem des einen oder der mehreren autonomen Fahrzeuge (V) definiert sind und
das Objekt (O) als eine mögliche Gefahr definiert ist, falls die Entfernung des Objekts (O) zu mindestens einem des einen oder der mehreren autonomen Fahrzeuge (V) kleiner als ein vorgegebener möglicher Gefahrenwert und größer als ein vorgegebener tatsächlicher Gefahrenwert ist; und
das Objekt (O) als eine tatsächliche Gefahr definiert ist, falls die Entfernung des Objekts (O) zu mindestens einem des einen oder der mehreren autonomen Fahrzeuge (V) kleiner als ein vorgegebener tatsächlicher Gefahrenwert ist.

6. Managementsystem für autonome Fahrzeuge nach mindestens einem der vorhergehenden Ansprüche, wobei
die mindestens eine Kandidatenroute (CR), die durch das erste autonome Fahrzeug berechnet wird, berechnet wird, um die mögliche Gefahr zu vermeiden, die durch ein Objekt (O) für das erste autonome Fahrzeug verursacht wird; und
das externe Steuerzentrum (300; 300') und/oder das eine oder die mehreren autonomen Fahrzeuge (V) konfiguriert sind, die mindestens eine Kandidatenroute (CR) auf der Grundlage der Relativposition des Objekts (O) zum ersten autonomen Fahrzeug zu berechnen.

7. Managementsystem für autonome Fahrzeuge nach mindestens einem der vorhergehenden Ansprüche, wobei
die mindestens eine Kandidatenroute (CR), die durch das externe Steuerzentrum (300; 300') und/oder das eine oder die mehreren autonomen Fahrzeuge (V) berechnet wird, berechnet wird, um die mögliche Gefahr zu vermeiden, die durch ein Objekt (O) für das erste autonome Fahrzeug verursacht wird; und
das erste autonome Fahrzeug konfiguriert ist, die mindestens eine Kandidatenroute (CR) auf der Grundlage einer Vorhersage der Bewegung des Objekts (O) zu berechnen.

8. Managementsystem für autonome Fahrzeuge nach mindestens einem der vorhergehenden Ansprüche, wobei
der Schritt des Berechnens durch das externe Steuerzentrum (300; 300') und/oder das eine oder die mehreren autonomen Fahrzeuge (V) der mindestens einen Kandidatenroute (CR) mindestens die Berechnung einer ersten Kandidatenroute (CR1) und einer zweiten Kandidatenroute (CR2) umfasst; wobei
die erste Kandidatenroute (CR1) definiert ist, um eine maximale Entfernung des ersten autonomen Fahrzeugs zur möglichen Gefahr zu halten; und
die zweite Kandidatenroute (CR2) definiert ist, um eine vordefinierte Entfernung des ersten autonomen Fahrzeugs zur möglichen Gefahr zu halten und sich letztlich neu auf die anfängliche Route auszurichten.

9. Managementsystem für autonome Fahrzeuge nach mindestens einem der vorhergehenden Ansprüche, wobei
das externe Steuerzentrum (300; 300') und/oder das eine oder die mehreren autonomen Fahrzeuge (V) konfiguriert sind, die gespeicherten Kandidatenrouten (CR) zu managen; und
das externe Steuerzentrum (300; 300') und/oder das eine oder die mehreren autonomen Fahrzeuge (V) konfiguriert sind, eine gespeicherte Kandidatenroute (CR) und den zugeordneten exklusiven Kandidatensicherheitsbereich (CSA) mindestens auf der Grundlage einer detektierten Änderung der Umgebung oder nach dem Verstreichen einer vordefinierten Zeit nach der Speicherung zu löschen und/oder zu aktualisieren.

10. Managementsystem für autonome Fahrzeuge nach Anspruch 3, wobei
der Exklusivbereichsmanager (304; 304') des externen Steuerzentrums konfiguriert ist, Informationen hinsichtlich jedes gespeicherten exklusiven Sicherheitsbereichs (SA) und jedes gespeicherten exklusiven Kandidatensicherheitsbereichs (CSA) zu speichern; wobei
falls der angeforderte exklusive Kandidatensicherheitsbereich (CSA) lediglich mit einer gespeicherten anfänglichen Route (IR) überlappt, der Exklusivbereichsmanager (304; 304') konfiguriert ist, die Speichergenehmigungsnachricht zum ersten autonomen Fahrzeug zu übertragen; und
der Routenplaner (302; 302') konfiguriert ist, die gespeicherte anfängliche Route (IR), die mit dem exklusiven Kandidatensicherheitsbereich (CSA) überlappt, zu löschen und eine neue anfängliche Route zu dem einen oder den mehreren autonomen Fahrzeugen (V), denen die gelöschte anfängliche Route zugewiesen war, neu zuzuweisen.

11. Autonomes Managementsystem nach Anspruch 3, wobei
falls nach dem Senden durch das externe Steuerzentrum (300; 300') und/oder das eine oder die mehreren autonomen Fahrzeuge (V) zum Exklusivbereichsmanager (304; 304') einer Anforderung einer berechneten Kandidatenroute (CR), um die jeweilige berechnete Kandidatenroute (CR) und den jeweiligen berechneten exklusiven Kandidatensicherheitsbereich (CSA) zu speichern, der Exklusivbereichsmanager (304; 304') keine Speichergenehmigungsnachricht zum ersten autonomen Fahrzeug sendet, der Routenplaner (302; 302') konfiguriert ist, eine alternative Kandidatenroute zu berechnen, und der Exklusivbereichsmanager (304; 304') konfiguriert ist, einen alternativen Kandidatensicherheitsbereich, der der alternativen Kandidatenroute zugeordnet ist, zu berechnen; wobei
der Exklusivbereichsmanager (304; 304') konfiguriert ist, die alternative Kandidatenroute und den alternativen Kandidatensicherheitsbereich zum ersten autonomen Fahrzeug zu senden; und
das erste autonome Fahrzeug konfiguriert ist, die alternative Kandidatenroute und den alternativen Kandidatensicherheitsbereich als eine Kandidatenroute (CR) und den Kandidatensicherheitsbereich (CSA), der der Kandidatenroute (CR) zugeordnet ist, zu speichern.

12. Managementsystem für autonome Fahrzeuge nach mindestens einem der vorhergehenden Ansprüche, wobei
das externe Steuerzentrum (300; 300') und/oder das eine oder die mehreren autonomen Fahrzeuge (V) konfiguriert sind, Kartendaten zu speichern, die zweidimensionale Informationen hinsichtlich des Bewegungsbereichs umfassen, in dem das eine oder die mehreren autonomen Fahrzeuge (V) sich bewegen; wobei
die zweidimensionalen Informationen mindestens Informationen über einen oder mehrere Fahrzeugprioritätsbereiche (PA), die den Bewegungsbereich definieren, in dem eine Bewegung des einen oder der mehreren autonomen Fahrzeuge bevorzugt ist, und einen oder mehrere Fahrzeugverbotsbereiche (VPA), die den Bewegungsbereich definieren, in dem eine Bewegung des einen oder der mehreren autonomen Fahrzeuge verboten ist, enthalten; und
der Routenplaner (302; 302') konfiguriert ist, eine anfängliche Route (IR) durch Zugreifen auf die Kartendaten und unter Verwendung lediglich von Orten, die durch den Fahrzeugprioritätsbereich (PA) zur Routenberechnung definiert sind, zu berechnen und zuzuweisen; und
der Exklusivbereichsmanager (304; 304') des externen Steuerzentrums (300; 300') konfiguriert ist, den exklusiven Sicherheitsbereich (SA) der entsprechenden anfänglichen Route (IR) durch Zugreifen auf die Kartendaten und unter Verwendung lediglich von Orten, die durch den Fahrzeugprioritätsbereich (PA) zur Berechnung des exklusiven Sicherheitsbereichs definiert sind, zu berechnen und zu speichern.

13. Managementsystem für autonome Fahrzeuge nach Anspruch 12, wobei
der Exklusivbereichsmanager (304; 304') konfiguriert ist, die Speicherübertragungsnachricht zu dem externen Steuerzentrum (300; 300') und/oder dem einen oder den mehreren autonomen Fahrzeugen (V) durch Vergleichen des angeforderten exklusiven Kandidatensicherheitsbereichs (CSA) mit den Kartendaten und Übertragen der Speicherübertragungsnachricht, falls der angeforderte exklusive Kandidatensicherheitsbereich (CSA) mit einem Bereich überlappt, der durch den Fahrzeugprioritätsbereich (PA) und/oder den Fahrzeugverbotsbereich (VPA) definiert ist, zu übertragen.

14. Verfahren zum dynamischen Managen einer Fahrroutine von mehreren autonomen Fahrzeugen (V) durch ein Managementsystem für autonome Fahrzeuge, das ein externes Steuerzentrum (300; 300'), ein oder mehrere autonome Fahrzeuge (V), die mit dem externen Steuerzentrum (300; 300') kommunikationstechnisch verbunden sind, und einen Routenplaner (302; 302') umfasst, wobei das externe Steuerzentrum (300; 300') ferner mindestens einen Exklusivbereichsmanager (304; 304') umfasst, der Routenplaner (302; 302') in dem externen Steuerzentrum (300; 300') oder dem einen oder den mehreren Fahrzeugen (V) enthalten ist und das Verfahren mindestens die folgenden Schritte umfasst:
- Berechnen und Zuweisen durch den Routenplaner (302; 302') einer anfängliche Route (IR) zu dem einen oder den mehreren autonomen Fahrzeugen (V) und Berechnen und Speichern durch den Exklusivbereichsmanager (302; 204') eines exklusiven Sicherheitsbereichs (SA) für die anfängliche Route (IR) und
- autonomes Bewegen durch das eine oder die mehreren autonomen Fahrzeuge (V) von einem vorgegebenen Startpunkt zu einem Zielpunkt auf der Grundlage der zugewiesenen anfänglichen Route (IR); wobei
das Verfahren ferner **gekennzeichnet ist durch**:
- Detektieren **durch** das externe Steuerzentrum (300; 300') und/oder das eine oder die mehreren autonomen Fahrzeuge (V) von Änderungen einer Umgebung um die anfängliche Route (IR) und Bestimmen mindestens einer einer möglichen Gefahr oder einer tatsächlichen Gefahr für das eine oder die mehreren autonomen Fahrzeuge (V), die sich auf der zugewiesenen anfänglichen Route (IR) bewegen;
- dann, wenn eine Änderung der Umgebung um die zugewiesene anfängliche Route (IR) als eine mögliche Gefahr bestimmt wurde, Berechnen **durch** das externe Steuerzentrum (300; 300') und/oder das eine oder die mehreren autonomen Fahrzeuge (V) mindestens einer Kandidatenroute (CR), die von der zugewiesenen anfänglichen Route (IR) verschieden ist, und eines exklusiven Kandidatensicherheitsbereichs (CSA), der der mindestens einen Kandidatenroute (CR) zugeordnet ist, für ein erstes autonomes Fahrzeug des einen oder der mehreren autonomen Fahrzeuge (V) und Speichern der mindestens einen Kandidatenroute (CR) und des mindestens einen exklusiven Kandidatensicherheitsbereichs (CSA); und
- dann, wenn eine Änderung der Umgebung um die anfängliche Route als eine tatsächliche Gefahr bestimmt wurde, Wählen **durch** das erste autonome Fahrzeug einer der gespeicherten Kandidatenrouten (CR);
- Setzen **durch** das erste autonome Fahrzeug der gewählten Kandidatenroute (CR) als eine neue anfängliche Route und Setzen des gewählten exklusiven Kandidatensicherheitsbereichs (CSA), der der gewählten Kandidatenroute (CR) zugeordnet ist, als den neuen exklusiven Sicherheitsbereich und
- Fortsetzen des Bewegens **durch** das erste autonome Fahrzeug auf der neuen anfänglichen Route,
wobei das externe Steuerzentrum (300; 300') und/oder das eine oder die mehreren autonomen Fahrzeuge (V) konfiguriert sind, mindestens eine der möglichen Gefahr oder der tatsächlichen Gefahr auf der Grundlage eines Gefahrenbestimmungsprozesses zu bestimmen, der die folgenden Schritte umfasst:
Empfangen von Objektinformationen hinsichtlich eines Objekts (O), das als eine mögliche Gefahr oder eine tatsächliche Gefahr identifiziert werden soll, wobei die Objektinformationen mindestens eine Position oder die Position und eine Geschwindigkeit des Objekts (O) enthalten; und
Bestimmen, ob das Objekt (O) eine mögliche Gefahr oder eine tatsächliche Gefahr für eines des einen oder der mehreren autonomen Fahrzeuge (V) ist, **durch** Vergleichen der empfangenen Objektinformationen mit vorgegebenen Schwellenwerten, die **durch** jedes des einen oder der mehreren autonomen Fahrzeuge (V) definiert sind.

## Revendications

1. Système de gestion de véhicules autonomes destiné à gérer de manière dynamique la routine de conduite d'une pluralité de véhicules autonomes (V), le système de gestion de véhicules autonomes comprenant :
- un centre de commande externe (300 ; 300') comprenant au moins un gestionnaire de zone exclusive (304 ; 304') ;
- un ou plusieurs véhicules autonomes (V) qui sont connectés en communication avec le centre de commande externe (300 ; 300') ; et
- un planificateur d'itinéraire (302 ; 302') qui est inclus dans le centre de commande externe (300 ; 300') ou dans lesdits un ou plusieurs véhicules autonomes (V) ;
dans lequel le planificateur d'itinéraire (302 ; 302') est configuré pour calculer et affecter un itinéraire initial (IR) auxdits un ou plusieurs véhicules autonomes (V) et le gestionnaire de zone exclusive (304 ; 304') est configuré pour calculer et stocker une zone de sécurité (SA) exclusive pour l'itinéraire initial (IR) ; et
lesdits un ou plusieurs véhicules autonomes (V) sont configurés pour se déplacer de manière autonome depuis un point de départ prédéterminé jusqu'à un point de destination sur la base de l'itinéraire initial (IR) affecté ;
le système de gestion de véhicules autonomes étant en outre **caractérisé en ce que**
le centre de commande externe (300 ; 300') et/ou lesdits un ou plusieurs véhicules autonomes (V) sont en outre configurés pour détecter des changements d'un environnement autour de l'itinéraire initial (IR) et pour déterminer l'un au moins d'un risque potentiel ou d'un risque réel pour lesdits un ou plusieurs véhicules autonomes (V) se déplaçant le long de l'itinéraire initial (IR) affecté ;
dans lequel, dans un cas où un changement de l'environnement autour de l'itinéraire initial affecté a été déterminé comme risque potentiel, le centre de commande externe (300 ; 300') et/ou lesdits un ou plusieurs véhicules autonomes (V) sont en outre configurés pour effectuer un processus de génération d'itinéraire candidat comprenant au moins les étapes consistant à
- calculer au moins un itinéraire candidat (CR) qui est différent de l'itinéraire initial (IR) affecté et une zone de sécurité candidate (CSA) exclusive associée audit au moins un itinéraire candidat pour un premier véhicule autonome desdits un ou plusieurs véhicules autonomes (V) ; et
- stocker ledit au moins un ensemble itinéraire candidat (CR) et zone de sécurité candidate (CSA) exclusive associée à l'itinéraire candidat (CR) ; et dans un cas où un changement de l'environnement autour de l'itinéraire initial a été déterminé comme risque réel, le premier véhicule autonome est configuré pour effectuer un processus de changement d'itinéraire comprenant au moins les étapes consistant à
- sélectionner l'un des ensembles itinéraire candidat (CR) et zone de sécurité candidate exclusive associée stockés;
- définir l'itinéraire candidat (CR) sélectionné comme nouvel itinéraire initial et définir la zone de sécurité candidate (CSA) exclusive associée à l'itinéraire candidat sélectionné comme nouvelle zone de sécurité exclusive ; et
- continuer un déplacement le long du nouvel itinéraire initial,
dans lequel
le centre de commande externe (300 ; 300') et/ou lesdits un ou plusieurs véhicules autonomes (V) sont configurés pour déterminer l'un au moins du risque potentiel ou du risque réel sur la base d'un processus de détermination de risque comprenant les étapes consistant à
recevoir des informations d'objet concernant un objet (O) devant être identifié comme risque potentiel ou risque réel, les informations d'objet incluant au moins une position où la position et une vitesse de l'objet (O) ; et
déterminer si l'objet (O) est un risque potentiel ou un risque réel pour l'un desdits un ou plusieurs véhicules autonomes (V) en comparant les informations d'objet reçues aux seuils prédéterminés définis par chacun desdits un ou plusieurs véhicules autonomes (V).

2. Système de gestion de véhicules autonomes selon la revendication 1, dans lequel
le processus de génération d'itinéraire candidat effectué par le centre de commande externe (300 ; 300') et/ou lesdits un ou plusieurs véhicules autonomes (V) comprend en outre
d'attribuer la zone de sécurité candidate stockée en ajoutant la zone de sécurité candidate (CSA) exclusive stockée à la zone affectée à la zone de sécurité (SA) exclusive du premier véhicule autonome.

3. Système de gestion de véhicules autonomes selon l'une au moins des revendications 1 ou 2, dans lequel
le processus de génération d'itinéraire candidat effectué par le centre de commande externe (300 ; 300') et/ou lesdits un ou plusieurs véhicules autonomes (V) comprend
d'envoyer, au gestionnaire de zone exclusive (304 ; 304'), une requête pour chaque itinéraire candidat (CR) calculé, pour stocker l'itinéraire candidat (CR) calculé et la zone de sécurité candidate (CSA) exclusive calculée respectifs ; et
de stocker ledit au moins un ensemble parmi les ensembles itinéraire candidat (CR) et zone de sécurité candidate (CSA) exclusive uniquement dans un cas où un message d'autorisation de stockage est reçu depuis le gestionnaire de zone exclusive (304 ; 304').

4. Système de gestion de véhicules autonomes selon la revendication 3, dans lequel
le gestionnaire de zone exclusive (304 ; 304') du centre de commande externe (300 ; 300') est configuré pour stocker des informations concernant chaque zone de sécurité (SA) exclusive qui sont actuellement stockées par le centre de commande externe (300 ; 300') et chaque zone de sécurité candidate (CSA) exclusive qui sont actuellement stockées par le centre de commande externe (300 ; 300') et/ou lesdits un ou plusieurs véhicules autonomes (V) ; et dans lequel
le gestionnaire de zone exclusive (304 ; 304') est configuré pour transmettre le message d'autorisation de stockage au premier véhicule autonome en accédant aux informations stockées et en transmettant le message d'autorisation de stockage dans un cas où la zone de sécurité candidate (CSA) exclusive requise n'est pas en chevauchement avec l'une quelconque des zones de sécurité (SA) exclusives stockées et des zones de sécurité candidates (CSA) exclusives stockées.

5. Système de gestion de véhicules autonomes selon la revendication 1, dans lequel
les seuils prédéterminés sont définis au moins par une distance de l'objet (O) à chacun desdits un ou plusieurs véhicules autonomes (V) ; et dans lequel
l'objet (O) est défini comme risque potentiel dans un cas où la distance de l'objet (O) à l'un au moins desdits un ou plusieurs véhicules autonomes (V) est inférieure à une valeur de risque potentiel prédéterminée et supérieure à une valeur de risque réel prédéterminée ; et
l'objet (O) est défini comme risque réel dans un cas où la distance de l'objet (O) à l'un au moins desdits un ou plusieurs véhicules autonomes (V) est inférieure à une valeur de risque réel prédéterminée.

6. Système de gestion de véhicules autonomes selon l'une au moins des revendications précédentes, dans lequel
ledit au moins un itinéraire candidat (CR) calculé par le premier véhicule autonome est calculé pour éviter le risque potentiel causé par un objet (O) au premier véhicule autonome ; et dans lequel
le centre de commande externe (300 ; 300') et/ou lesdits un ou plusieurs véhicules autonomes (V) sont configurés pour calculer ledit au moins un itinéraire candidat (CR) sur la base de la position relative de l'objet (O) au premier véhicule autonome.

7. Système de gestion de véhicules autonomes selon l'une au moins des revendications précédentes, dans lequel
ledit au moins un itinéraire candidat (CR) calculé par le centre de commande externe (300 ; 300') et/ou lesdits un ou plusieurs véhicules autonomes (V) est calculé pour éviter le risque potentiel causé par un objet (O) au premier véhicule autonome ; et dans lequel
le premier véhicule autonome est configuré pour calculer ledit au moins un itinéraire candidat (CR) sur la base d'une prédiction du déplacement de l'objet (O).

8. Système de gestion de véhicules autonomes selon l'une au moins des revendications précédentes, dans lequel
les étapes consistant à calculer, via le centre de commande externe (300 ; 300') et/ou lesdits un ou plusieurs véhicules autonomes (V), ledit au moins un itinéraire candidat (CR) comprend au moins le calcul d'un premier itinéraire candidat (CR1) et un deuxième itinéraire candidat (CR2) ; dans lequel
le premier itinéraire candidat (CR1) est défini pour garder une distance maximum du premier véhicule autonome au risque potentiel ; et
le deuxième itinéraire candidat (CR2) est défini pour garder une distance prédéfinie du premier véhicule autonome au risque potentiel et pour se réaligner finalement sur l'itinéraire initial.

9. Système de gestion de véhicules autonomes selon l'une au moins des revendications précédentes, dans lequel
le centre de commande externe (300 ; 300') et/ou lesdits un ou plusieurs véhicules autonomes (V) sont configurés pour gérer les itinéraires candidats (CR) stockés ; et
dans lequel le centre de commande externe (300 ; 300') et/ou lesdits un ou plusieurs véhicules autonomes (V) sont configurés pour supprimer et/ou mettre à jour un itinéraire candidat (CR) stocké et la zone de sécurité candidate (CSA) exclusive associée sur la base d'au moins un changement détecté de l'environnement ou après écoulement d'un temps prédéfini après le stockage.

10. Système de gestion de véhicules autonomes selon la revendication 3, dans lequel
le gestionnaire de zone exclusive (304 ; 304') du centre de commande externe est configuré pour stocker des informations concernant chaque zone de sécurité (SA) exclusive stockée et chaque zone de sécurité candidate (CSA) exclusive stockée ; dans lequel
dans un cas où la zone de sécurité candidate (CSA) exclusive requise n'est pas uniquement en chevauchement avec un itinéraire initial (IR) stocké, le gestionnaire de zone exclusive (304 ; 304') est configuré pour transmettre le message d'autorisation de stockage au premier véhicule autonome ; et
le planificateur d'itinéraire (302 ; 302') est configuré pour supprimer l'itinéraire initial (IR) stocké en chevauchement avec la zone de sécurité candidate (CSA) exclusive et pour réaffecter un nouvel itinéraire initial auxdits un ou plusieurs véhicules autonomes (V) auquel l'itinéraire initial supprimé avait été affecté.

11. Système de gestion de véhicules autonomes selon la revendication 3, dans lequel
dans un cas après avoir envoyé, via le centre de commande externe (300 ; 300') et lesdits un ou plusieurs véhicules autonomes (V) au gestionnaire de zone exclusive (304 ; 304'), une requête pour un itinéraire candidat (CR) calculé pour stocker l'itinéraire candidat (CR) calculé et une zone de sécurité candidate (CSA) exclusive respectifs, le gestionnaire de zone exclusive (304 ; 304') n'envoie pas de message d'autorisation de stockage au premier véhicule autonome, le planificateur d'itinéraire (302 ; 302') est configuré pour calculer un itinéraire candidat alternatif et le gestionnaire de zone exclusive (304 ; 304') est configuré pour calculer une zone de sécurité candidate alternative associée à l'itinéraire candidat alternatif ; dans lequel
le gestionnaire de zone exclusive (304 ; 304') est configuré pour envoyer l'itinéraire candidat alternatif et la zone de sécurité candidate alternative au premier véhicule autonome ; et
le premier véhicule autonome est configuré pour stocker l'itinéraire candidat alternatif et la zone de sécurité candidate alternative comme itinéraire candidat (CR) et la zone de sécurité candidate (CSA) associée à l'itinéraire candidat (CR).

12. Système de gestion de véhicules autonomes selon l'une au moins des revendications précédentes, dans lequel
le centre de commande externe (300 ; 300') et lesdits un ou plusieurs véhicules autonomes (V) sont configurés pour stocker des données cartographiques comprenant des informations bidimensionnelles concernant la zone de déplacement dans laquelle lesdits un ou plusieurs un véhicules autonomes (V) se déplacent ; dans lequel
les informations bidimensionnelles incluent au moins des informations concernant une ou plusieurs zones de priorité de véhicules (PA) définissant la zone de déplacement dans laquelle lesdits un ou plusieurs véhicules autonomes doivent se déplacer de manière préférentielle et une ou plusieurs zones d'interdiction de véhicules (VPA) définissant la zone de déplacement dans laquelle lesdits un ou plusieurs véhicules autonomes ont interdiction de se déplacer ; et dans lequel
le planificateur d'itinéraire (302 ; 302') est configuré pour calculer et affecter un itinéraire initial (IR) en accédant aux données cartographiques et en utilisant uniquement des emplacements définis par la zone de priorité de véhicules (PA) pour un calcul d'itinéraire ; et
le gestionnaire de zone exclusive (304 ; 304') du centre de commande externe (300 ; 300') est configuré pour calculer et stocker la zone de sécurité (SA) exclusive de l'itinéraire initial correspondant (IR) en accédant aux données cartographiques et en utilisant uniquement des emplacements définis par la zone de priorité de véhicules (PA) pour un calcul de zone de sécurité exclusive.

13. Système de gestion de véhicules autonomes selon la revendication 12, dans lequel
le gestionnaire de zone exclusive (304 ; 304') est configuré pour transmettre le message d'autorisation de stockage au centre de commande externe (300 ; 300') et/ou auxdits un ou plusieurs véhicules autonomes (V) en comparant la zone de sécurité candidate (CSA) exclusive requise aux données cartographiques et en transmettant le message de permission de stockage dans un cas où la zone de sécurité candidate (CSA) exclusive requise est en chevauchement avec une zone définie par la zone de priorité de véhicules (PA) et/ou la zone d'interdiction de véhicules (VPA).

14. Procédé pour gérer de manière dynamique une routine de conduite d'une pluralité de véhicules autonomes (V) via un système de gestion de véhicules autonomes comprenant un centre de commande externe (300 ; 300'), un ou plusieurs véhicules autonomes (V) qui sont connectés en communication avec le centre de commande externe (300 ; 300') et un planificateur d'itinéraire (302 ; 302'), le centre de commande externe (300 ; 300') comprenant en outre au moins un gestionnaire de zone exclusive (304 ; 304') et le planificateur d'itinéraire (302 ; 302') étant inclus dans le centre de commande externe (300 ; 300') et/ou dans lesdits un ou plusieurs véhicules (V), le procédé comprenant au moins les étapes consistant à :
- calculer et affecter, via le planificateur d'itinéraire (302 ; 302'), un itinéraire initial (IR) auxdits un ou plusieurs véhicules autonomes (V), et calculer et stocker, via le gestionnaire de zone exclusive (304 ; 304'), une zone de sécurité (SA) exclusive pour l'itinéraire initial (IR) ;
- assurer un déplacement autonome, via lesdits un ou plusieurs véhicules autonomes (V), depuis un point de départ prédéterminé jusqu'à un point de destination sur la base de l'itinéraire initial (IR) affecté ;
le procédé étant en outre **caractérisé par** les étapes consistant à :
- détecter, via le centre de commande externe (300 ; 300') et/ou lesdits un ou plusieurs véhicules autonomes (V), des changements d'un environnement autour de l'itinéraire initial (IR) et déterminer l'un au moins d'un risque potentiel ou d'un risque réel pour lesdits un ou plusieurs véhicules autonomes (V) se déplaçant le long de l'itinéraire initial (IR) affecté ;
- dans un cas où un changement de l'environnement autour de l'itinéraire initial (IR) affecté a été déterminé comme risque potentiel, calculer, via le centre de commande externe (300 ; 300') et/ou lesdits un ou plusieurs véhicules autonomes (V), au moins un itinéraire candidat (CR) qui est différent de l'itinéraire initial (IR) affecté et une zone de sécurité candidate (CSA) exclusive associée audit au moins un itinéraire candidat (CR) pour un premier véhicule autonome desdits un ou plusieurs véhicules autonomes (V) et stocker ledit au moins un itinéraire candidat (CR) et la zone de sécurité candidate (CSA) exclusive ; et
- dans un cas où un changement de l'environnement autour de l'itinéraire initial a été déterminé comme risque réel, sélectionner, via le premier véhicule autonome, l'un des itinéraires candidats (CR) stockés ;
- définir, via le premier véhicule autonome, l'itinéraire candidat (CR) sélectionné comme nouvel itinéraire initial et définir la zone de sécurité candidate (CSA) exclusive sélectionnée associée à l'itinéraire candidat (CR) sélectionné comme nouvelle zone de sécurité exclusive ; et
- continuer d'assurer un déplacement, le via le premier véhicule autonome, le long du nouvel itinéraire initial,
dans lequel le centre de commande externe (300 ; 300') et/ou lesdits un ou plusieurs véhicules autonomes (V) sont configurés pour déterminer l'un au moins du risque potentiel ou du risque réel sur la base d'un processus de détermination de risque comprenant les étapes consistant à
recevoir des informations d'objet concernant un objet (O) devant être identifié comme risque potentiel ou risque réel, les informations d'objet incluant au moins une position ou la position et une vitesse de l'objet (O) ; et
déterminer si l'objet (O) est un risque potentiel ou un risque réel pour l'un desdits un ou plusieurs véhicules autonomes (V) en comparant les informations d'objet reçues aux seuils prédéterminés définis par chacun desdits un ou plusieurs véhicules autonomes (V).
